# EUROPEAN PATENT SPECIFICATION

(11) **EP 2 610 038 B1**
(45) Date of publication and mention of the grant of the patent: **20.11.2019**
(21) Application number: 11819745.8
(22) Date of filing: 28.07.2011
(51) Int. Cl.: B25J 15/08, F22B 37/02, G21C 17/003, G21C 19/02, G21D 1/00, F22B 37/00, B66F 3/24, G21C 17/01, G21C 17/017

(54) **CLAMPER, IN-WATER-CHAMBER OPERATION DEVICE, AND CLAMPING METHOD**
KLEMME, VORRICHTUNG FÜR EINE UNTERWASSERKAMMER UND KLEMMVERFAHREN
ELÉMENT DE SERRAGE, DISPOSITIF DE FONCTIONNEMENT EN CHAMBRE D'ÉQUILIBRE, ET PROCÉDÉ DE SERRAGE

(30) Priority: 23.08.2010 JP 2010186627
(43) Date of publication of application: 03.07.2013
(73) Proprietor: Mitsubishi Heavy Industries, Ltd., Tokyo 108-8215 (JP)
(72) Inventor: KAMIYOSHI, Atsushi, Minato-ku, Tokyo 108-8215 (JP); BABA, Takanori, Minato-ku, Tokyo 108-8215 (JP); TANAKA, Hidekazu, Minato-ku, Tokyo 108-8215 (JP)
(74) Representative: Intès, Didier Gérard André
(86) International application number: PCT/JP2011/067338
(87) International publication number: WO 2012/026280

(56) References cited:
- EP-A1- 0 180 892
- EP-A1- 0 341 429
- EP-A2- 0 194 467
- EP-A2- 0 354 090
- WO-A1-94/24675
- JP-A- 1 084 191
- JP-A- 59 097 864
- JP-A- 62 061 885
- JP-A- 63 243 606
- JP-U- H0 457 083

## Description

### Field

The present invention relates to a clamper, an in-channel-head operation device, and a clamping method, and particularly, to a clamper capable of stably clamping a tube member, an in-channel-head operation device having the clamper, and a clamping method.

### Background

In a steam generator of a nuclear plant, an in-channel-head operation device is used to carry out an operation inside a water chamber. Further, in recent years, there has been proposed an in-channel-head operation device that has a manipulator of which a front end portion is equipped with a working tool. Further, since a floor surface of the water chamber has a spherical shape, there has been proposed a configuration in which such an indoor operation device is installed while being suspended from a tube plate surface of the water chamber in order to improve the workability of the in-channel-head operation device. As such an in-channel-head operation device, a technique disclosed in Patent Literature 1 is known.

Here, a plurality of heat transfer tubes are opened and arranged on the tube plate surface of the water chamber. Therefore, in such an in-channel-head operation device, there has been proposed a configuration in which a clamper is provided so as to clamp and hold the heat transfer tube by inserting a front end portion thereof into the heat transfer tube and the in-channel-head operation device is fixed to the tube plate surface by the clamper. As an in-channel-head operation device having such a clamper, a technique disclosed in Patent Literature 2 is known.

### Citation List

### Patent Literature

Patent Literature 1: Japanese Patent Application Laid-open No. 2007-183278
Patent Literature 2: Japanese Utility Model Registration No. 2503172

EP 0 341 429 discloses a device for the introduction of a sleeve into a pipe of a steam generator. EP 0 180 892 discloses an apparatus for electropolishing the inner surfaces of tubes. WO 94/24675 discloses a visual inspection tool. EP 0 354 090 discloses an apparatus for the ultrasonic non-destructive testing of a circular weld inside a pipe in a steam generator. EP 0 194 467 discloses a device for inserting a sleeve in a tube of a steam boiler. JP S63 243606 discloses a tool fixture.

### Summary

### Technical Problem

In the in-channel-head operation device, a manipulator increases in weight, and various force and moment act on the clamp mechanism by the operation of the manipulator during an operation inside the water chamber. For this reason, there has been a demand for the clamper to stably clamp and hold the heat transfer tube.

Therefore, the invention is made in view of such circumstances, and it is an object of the invention to provide a clamper capable of stably clamping a tube member, an in-channel-head operation device, and a clamping method.

### Solution to Problem

According to an aspect of the present invention, a clamper which clamps a subject clamping member is defined by claim 1 and includes: a clamp mechanism which clamps the subject clamping member; and a contact portion which contacts the subject clamping member at a position different from the clamping position of the clamp mechanism in the clamping state of the clamp mechanism.

In the clamper, in a state where the clamp mechanism clamps the subject clamping member, the contact portion contacts the subject clamping member at a position (for example, the opening edge portion of the heat transfer tube or the tube plate surface when the subject clamping member is the heat transfer tube disposed on the tube plate) different from the clamping position of the clamp mechanism. Thus, the clamper may clamp the subject clamping member in a close contact state by the multi-point support of the clamp mechanism (the cotter) and the contact portion. Accordingly, there is an advantage that the subject clamping member may be stably clamped compared to the configuration in which the clamper does not include the contact portion.

Advantageously, the clamper further includes a lifting and lowering mechanism which lifts and lowers the clamp mechanism with respect to the subject clamping member. The clamp mechanism includes the contact portion.

In the clamper, the lifting and lowering mechanism lifts and lowers the clamp mechanism, so that the contact portion of the clamp mechanism is lifted and lowered with respect to the subject clamping member. Accordingly, there is an advantage that the contact portion may approach the subject clamping member regardless of the manual operation of the operator.

In the clamper, the clamp mechanism includes a clamp body which has an insertion portion to be inserted into the subject clamping member, a cotter which protrudes from the insertion portion and comes into friction-contact with the subject clamping member, a piston rod which presses the cotter so that the cotter protrudes from the insertion portion, and a rod cylinder which is integrated with the clamp body and drives the piston rod.

In the clamper, when the rod cylinder drives the piston rod while the clamp mechanism inserts the insertion portion into the subject clamping member, the piston rod presses the cotter so that the cotter protrudes from the insertion portion. Then, the cotter comes into friction-contact with the subject clamping member in a pressed state, so that the subject clamping member is clamped. Accordingly, there is an advantage that the subject clamping member may be stably clamped.

Further, in the clamper according to the invention, the piston rod presses the cotter so that the cotter protrudes from the insertion portion when the rod cylinder pulls the piston rod toward the opposite side to the insertion direction of the insertion portion.

In the clamper, it is possible to realize a mechanism which pulls the piston rod toward the opposite side to the insertion direction (toward the rear end portion) so as to operate the cotter.

Further, in the clamper according to the invention, the cotter is disposed inside the clamp body so as to be movable in a reciprocating manner.

In the clamper, when the rod cylinder further pulls the piston rod while the subject clamping member is clamped (for example, the insertion portion is inserted into the subject clamping member and the piston rod is pulled so that the cotter comes into friction-contact with the subject clamping member), the clamp body may advance in the insertion direction of the insertion portion since the rod cylinder is integrated with the clamp body and the cotter is movable in a reciprocating manner inside the clamp body. Then, when there is a gap between the contact portion and the subject clamping member, the gap is closed so that the contact portion may come into close contact with the subject clamping member. Accordingly, there is an advantage that the subject clamping member may be stably clamped.

Further, in the clamper of the invention, the insertion portion is separated from the clamp body and is disposed so as to be slidable on the clamp body.

In the clamper, since the insertion portion is fitted to the clamp body so as to be slidable thereon, the clamp body may be lifted while sliding on the insertion portion in a state where the insertion portion is clamped. Accordingly, since the contact portion comes into close contact with the subject clamping member in a pressed state, there is an advantage that the clamping performance improves.

Further, the clamper according to the invention includes the lifting and lowering mechanism which lifts and lowers the clamp mechanism with respect to the subject clamping member and has the contact portion and the adjusting mechanism which moves the lifting and lowering mechanism in a reciprocating manner with respect to the subject clamping member.

In the clamper, the lifting and lowering mechanism is installed so that the contact portion contacts the subject clamping member while the clamp mechanism clamps the subject clamping member. At this time, the lifting and lowering mechanism lifts and lowers the clamp mechanism with respect to the subject clamping member and the adjusting mechanism moves the lifting and lowering mechanism in a reciprocating manner with respect to the subject clamping member. Accordingly, the contact portion of the lifting and lowering mechanism comes into close contact with the subject clamping member in a pressed state. Accordingly, there is an advantage that the subject clamping member may be stably clamped compared to the configuration in which the clamper does not include the contact portion.

Further, in the clamper according to the invention, the clamp mechanism includes the clamp body which has the insertion portion to be inserted into the subject clamping member, the cotter which protrudes from the insertion portion so as to come into friction-contact with the subject clamping member, the piston rod which presses the cotter so that the cotter protrudes from the insertion portion, and the rod cylinder which is integrated with the clamp body and drives the piston rod.

In the clamper, when the rod cylinder drives the piston rod while the clamp mechanism inserts the insertion portion into the subject clamping member, the piston rod presses the cotter so that the cotter protrudes from the insertion portion. Then, the cotter comes into friction-contact with the subject clamping member in a pressed state so as to clamp the subject clamping member. Accordingly, there is an advantage that the subject clamping member may be stably clamped.

Advantageously, in the clamper, when the rod cylinder presses the piston rod in the insertion direction of the insertion portion, the piston rod presses the cotter so that the cotter protrudes from the insertion portion.

In the clamper, it is possible to realize a mechanism which presses the piston rod in the insertion direction (toward the front end portion) so as to operate the cotter.

Advantageously, in the clamper, when the rod cylinder pulls the piston rod toward the opposite side to the insertion direction of the insertion portion, the piston rod presses the cotter so that the cotter protrudes from the insertion portion.

In the clamper, it is possible to realize a mechanism which pulls the piston rod toward the opposite side to the insertion direction (toward the rear end portion) so as to operate the cotter.

Advantageously, in the clamper, the rod cylinder includes a check valve which prevents a reverse flow of a hydraulic fluid for driving the piston rod.

In the clamper, since a piston rod 2313 is maintained in a fixed state when an original pressure of a hydraulic fluid of a clamper 23 is interrupted, the clamping state of the clamper 23 is appropriately maintained.

Advantageously, in the clamper, the subject clamping member is a member that is formed by a tube member, and the contact portion contacts the member.

Advantageously, in the clamper, the member is a tube plate.

According to another aspect of the present invention, an in-channel-head operation device includes any one of the clampers described above.

According to still another aspect of the present invention, a method of clamping a subject clamping member by a clamper includes causing the clamper to clamp the subject clamping member and then a part of the other portion of the clamper to contact a position different from the position where the subject clamping member is clamped.

### Advantageous Effects of Invention

In the clamper according to the invention, the clamp mechanism is installed so that the contact portion contacts the tube plate or the tube member while the insertion portion is inserted into the tube member so as to clamp the tube member. Thus, the clamp mechanism may clamp the tube member so that the contact portion comes into close contact with the tube plate surface. Accordingly, there is an advantage that the tube member may be stably clamped compared to the configuration without the contact portion.

### Brief Description of Drawings

FIG. 1 is an axial cross-sectional view illustrating a clamper according to an embodiment 1 of the invention.
FIG. 2 is a diagram illustrating a clamping process of the clamper described in FIG. 1.
FIG. 3 is a diagram illustrating an unclamping process of the clamper described in FIG. 1.
FIG. 4 is a schematic diagram illustrating a specific example of the clamper described in FIG. 1.
FIG. 5 is a diagram illustrating an operation of the clamper described in FIG. 4.
FIG. 6 is a diagram illustrating a cotter diameter decreasing structure of the clamper described in FIG. 1.
FIG. 7 is a diagram illustrating a cotter diameter decreasing structure of the clamper described in FIG. 1.
FIG. 8 is a diagram illustrating a modified example of the cotter diameter decreasing structure described in FIG. 6.
FIG. 9 is a diagram illustrating a modified example of the cotter diameter decreasing structure described in FIG. 6.
FIG. 10 is a diagram illustrating a modified example of the cotter diameter decreasing structure described in FIG. 6.
FIG. 11 is a diagram illustrating a modified example of the cotter diameter decreasing structure described in FIG. 7.
FIG. 12 is a diagram illustrating a modified example of the cotter diameter decreasing structure described in FIG. 7.
FIG. 13 is a diagram illustrating a modified example of the cotter diameter decreasing structure described in FIG. 7.
FIG. 14 is a diagram illustrating a modified example of the cotter diameter decreasing structure described in FIG. 11.
FIG. 15 is an axial cross-sectional view illustrating a clamper according to a second embodiment of the invention.
FIG. 16 is a diagram illustrating a clamping process (1) of the clamper described in FIG. 15.
FIG. 17 is a diagram illustrating the clamping process (1) of the clamper described in FIG. 15.
FIG. 18 is a diagram illustrating a clamping process (2) of the clamper described in FIG. 15.
FIG. 19 is a diagram illustrating the clamping process (2) of the clamper described in FIG. 15.
FIG. 20 is a perspective view illustrating an in-channel-head operation device of a steam generator.
FIG. 21 is a perspective view illustrating a specific example of a base of the in-channel-head operation device described in FIG. 20.
FIG. 22 is a perspective view illustrating a specific example of the base of the in-channel-head operation device described in FIG. 20.
FIG. 23 is a diagram illustrating a state of installing the base described in FIG. 21.
FIG. 24 is a diagram illustrating a state of installing the base described in FIG. 21.
FIG. 25 is a diagram illustrating a process of installing the base. Description of Embodiments

Hereinafter, the invention will be described in detail by referring to the drawings. Furthermore, the invention is not limited to the embodiment. Further, constituents of the embodiment include a constituent which may be replaced or apparently replaced while maintaining the identity of the invention. Further, a plurality of modified examples described in the embodiment may be arbitrarily combined with each other within the scope which may be apparently supposed by the person skilled in the art.

### [In-channel-head operation device]

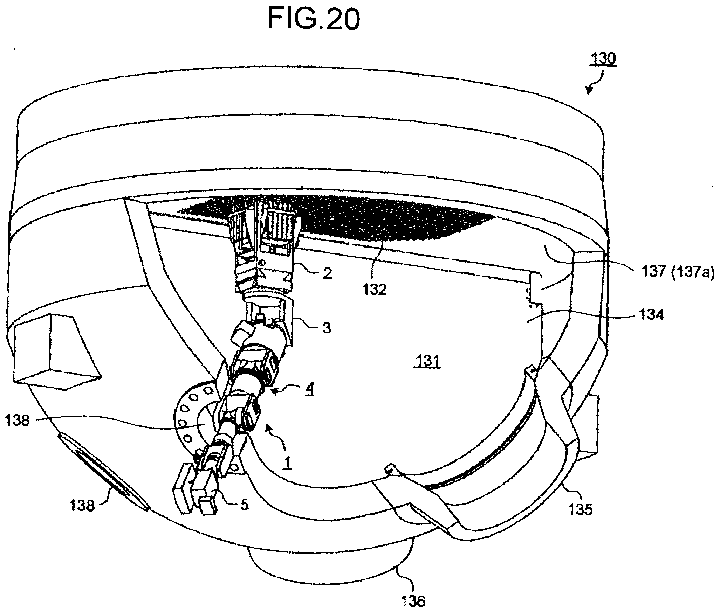

A clamper 23 is applied to, for example, an in-channel-head operation device 1 which carries out an operation inside a water chamber in a steam generator 130 of a nuclear plant (see FIG. 20).

The in-channel-head operation device 1 is a device which is carried to a water chamber 131 of the steam generator 130, is installed therein, and is remotely operated so as to carry out an operation inside the water chamber. The in-channel-head operation device 1 includes a base 2, an intermediate link 3, a manipulator 4, and a tool 5. The base 2 is a device which becomes the base of the in-channel-head operation device 1, and is installed in a tube plate surface 137a of the water chamber 131. The base 2 clamps and holds heat transfer tubes 132 of the tube plate surface 137a so as to be fixed to the tube plate surface 137a. The intermediate link 3 is a component which connects the base 2 to the manipulator 4 so as to incline a reference axis of the manipulator 4 with respect to the base 2 (the tube plate surface 137a). The manipulator 4 is a multi-axis manipulator, and is installed so as to be hung from the tube plate surface 137a of the water chamber 131 through the base 2 and the intermediate link 3. The manipulator 4 may change its posture by the remote operation. The tool 5 is a tool which corresponds to the operation inside the predetermined water chamber 131, and is attached to a front end portion of the manipulator 4. The tool 5 is, for example, a maintenance working tool which is used in the maintenance operation inside the water chamber, and includes an inspecting tool, a cutting tool, a welding tool, and the like.

In the in-channel-head operation device 1, the manipulator 4 is hung while being suspended from the tube plate surface 137a of the water chamber 131, and carries out an operation inside the water chamber by moving the tool 5 through a change in posture while being rotated in this state. Accordingly, it is possible to realize an operation inside the water chamber in a wide range based on the base 2 of the tube plate surface 137a. Further, the in-channel-head operation device 1 may move inside the water chamber 131 along the tube plate surface 137a since the base 2 has a tube plate walking function to be described later. Accordingly, since the work region inside the water chamber 131 is widened, the workability of the operation inside the water chamber 131 is improved. Furthermore, the operation inside the water chamber 131 includes, for example, an operation of welding an inlet tube stand 135, an outlet tube stand 136, the heat transfer tubes 132, a partition plate 134, and a tube plate 137, an operation of inspecting a welded portion between the partition plate 134 and a water chamber glass portion, a maintenance operation, and the like.

### [Base]

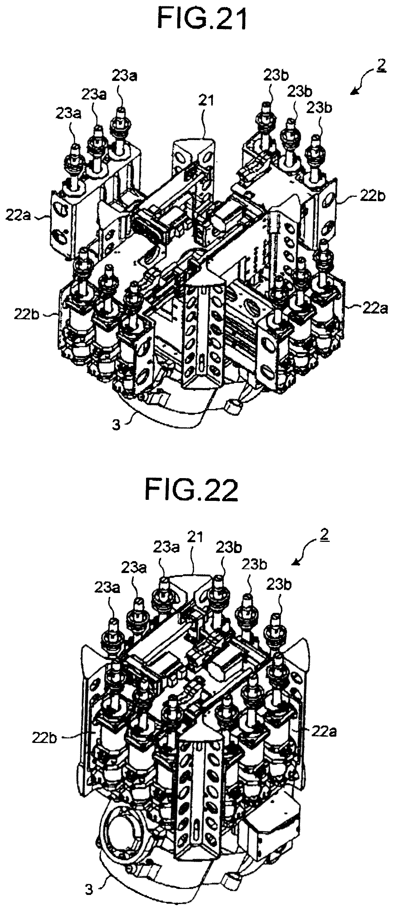

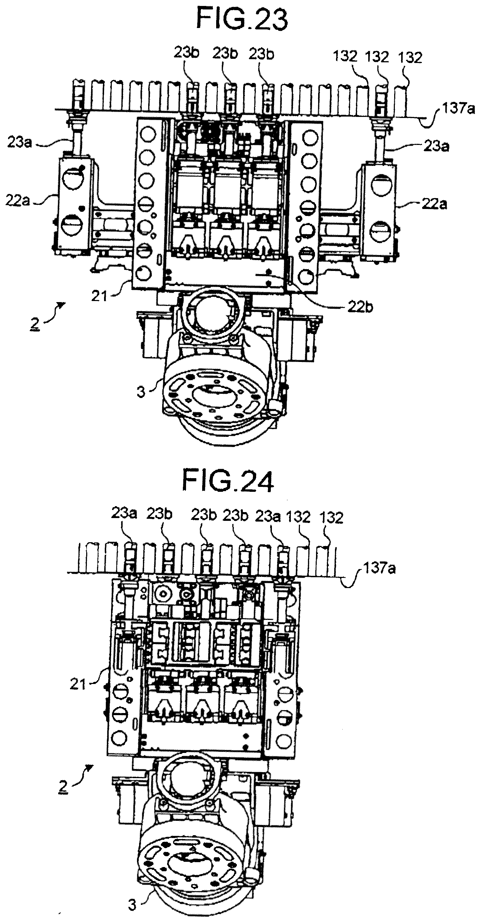

FIGS. 21 and 22 are perspective views illustrating a specific example of the base of the in-channel-head operation device described in FIG. 20. FIGS. 23 and 24 are diagrams illustrating an installation state of the base described in FIG. 21. In these drawings, FIGS. 21 and 23 illustrate a state where the base opens all wings, and FIGS. 22 and 24 illustrate a state where the base closes all wings.

The base 2 includes a base body 21, four wings 22a and 22b, and a plurality of clampers 23a and 23b. The base body 21 is a rim-shaped casing. The four wings 22a and 22b are installed by being inserted into the base body 21. The wings 22a and 22b are driven by, for example, a telescopic ladder mechanism, and may slide in a direction perpendicular to each other with respect to the installation position of the base body 21 (see FIGS. 21 and 22). Further, the four wings 22a and 22b may slide in different directions, and are independently driven. The clampers 23a and 23b are mechanisms which insert the front end portions thereof into the heat transfer tubes 132 so as to clamp and hold the heat transfer tube 132. For example, in the embodiment, a set having three clampers 23a (23b) is installed in each end portion of each wing 22a (22b). Further, the clampers 23a (23b) are arranged in series so as to match the installation interval of the heat transfer tubes 132 in the tube plate surface 137a. Furthermore, a specific configuration of the clampers 23a and 23b will be described later.

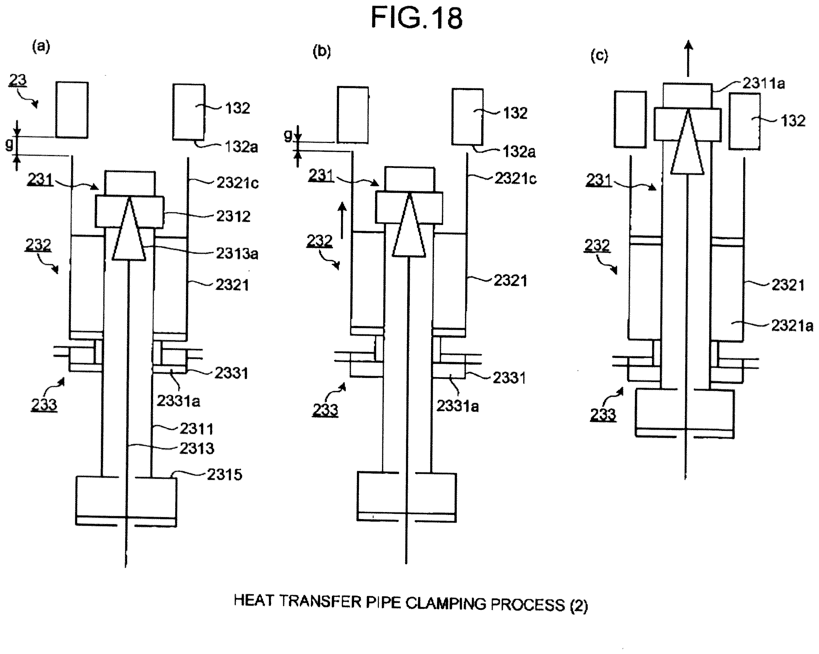

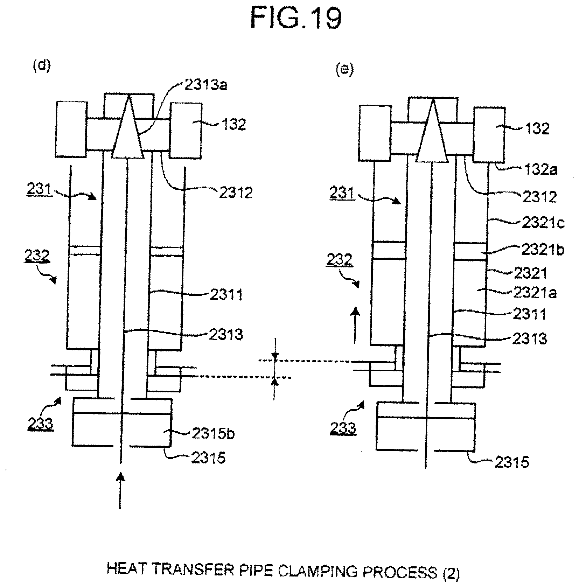

In the base 2, the respective clampers 23a and 23b insert the front end portions thereof into the heat transfer tubes 132 so as to clamp and hold the heat transfer tubes 132, and hence the base 2 is fixed while being suspended from the tube plate surface 137a (see FIGS. 18 and 19). Further, the base 2 moves the wing 22a (22b) in a telescopic manner so as to slide the position of the clamper 23a (23b), and sequentially changes the clamping position of the clamper 23a (23b) with respect to the heat transfer tubes 132, so that the base may move along the tube plate surface 137a (tube plate walking) (not illustrated). Furthermore, the walking logic according to the tube plate walking of such the base 2 may be arbitrarily adopted within the scope which may be apparently supposed by the person skilled in the art.

### [Embodiment 1]

### [Clamper of base]

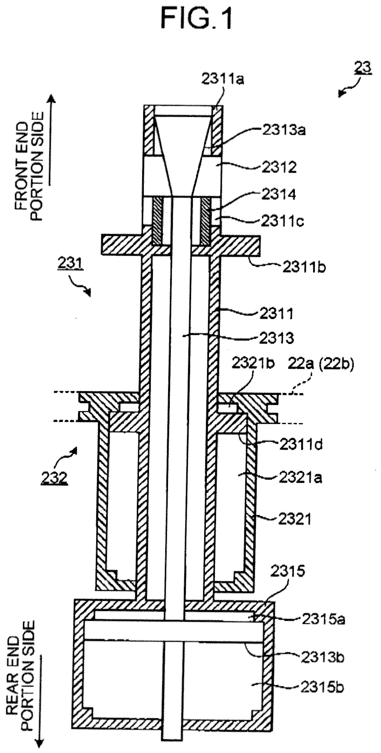

FIG. 1 is an axial cross-sectional view illustrating the clamper according to the embodiment 1 of the invention.

Furthermore, in the embodiment, the side of the heat transfer tube 132 (the side of the tube plate surface 137a of the water chamber 131) will be called the upper side or the front end portion side of the clamper and the opposite side (the floor surface side of the water chamber 131) will be called the lower side or the rear end portion side of the clamper.

The clamper 23 is a mechanism which inserts the front end portion thereof into the heat transfer tube 132 so as to clamp the heat transfer tube 132, and may be adopted as, for example, the clampers 23a and 23b of the base 2. The clamper 23 includes a clamp mechanism 231 and a lifting and lowering mechanism 232.

The clamp mechanism 231 is a mechanism which inserts a front end portion thereof into the heat transfer tube 132 so as to clamp the heat transfer tube 132 by the friction-contact, and includes a clamp body 2311, a cotter 2312, a piston rod 2313, an elastic body 2314, and a rod cylinder 2315.

The clamp body 2311 constitutes a body of the clamp mechanism 231. The axial front end portion of the clamp body 2311 is provided with an insertion portion 2311a which may be inserted into the heat transfer tube 132. Further, the clamp body 2311 includes a contact portion 2311b which may contact the tube plate surface 137a of the heat transfer tube 132 while inserting the insertion portion 2311a into the heat transfer tube 132. For example, in the embodiment 1, the clamp body 2311 is formed as an elongated cylindrical member, and one end portion thereof is provided with the insertion portion 2311a. Further, the base of the insertion portion 2311a of the clamp body 2311 is provided with the flange-shaped contact portion 2311b, and in a state where the insertion portion 2311a is inserted into the heat transfer tube 132, the contact portion 2311b comes into plane-contact with an opening edge portion 132a of the heat transfer tube 132. Further, the insertion portion 2311a of the clamp body 2311 is provided with slits 2311c which correspond to the number of the installed cotters 2312.

The cotter 2312 is a member which is pressed into the inner peripheral surface of the heat transfer tube 132 so as to come into friction-contact with the surface when clamping the heat transfer tube 132, and is formed of, for example, metal or the like. The cotter 2312 is installed in the clamp body 2311, and is disposed so that the cotter protrudes from the insertion portion 2311a of the clamp body 2311 and to be accommodated in the insertion portion 2311a. Further, the cotter 2312 is disposed so as to be movable in a reciprocating manner in the axial direction of the clamp body 2311 with respect to the insertion portion 2311a. For example, in the embodiment 1, the slit 2311c is formed in the insertion portion 2311a of the clamp body 2311, and the cotter 2312 is inserted and disposed in the slit 2311c. Further, the cotter 2312 is disposed inside the slit 2311c so as to be movable in a reciprocating manner in the radial direction and the axial direction of the clamp body 2311.

The piston rod 2313 is a rod which drives the cotter 2312, and is inserted into the clamp body 2311 so as to be movable in a reciprocating manner in the axial direction of the clamp body 2311. The piston rod 2313 includes a tapered front end portion, and is disposed so as to contact the cotter 2312 while a tapered surface 2313a faces the rear end portion of the clamp body 2311. Further, when the piston rod 2313 is pulled toward the rear end portion of the clamp body 2311, the tapered surface 2313a presses the inner peripheral surface of the cotter 2312 so as to protrude from the clamp body 2311. Further, the rear end portion of the piston rod 2313 is provided with a piston portion 2313b.

The elastic body 2314 is a member which disposes the cotter 2312 on the upper portion of the slit 2311c, and is formed by, for example, a coil spring or a rubber tube. The elastic body 2314 is inserted into the clamp body 2311, and is supported by the clamp body 2311 so as to be biased to the rear end portion of the cotter 2312. The cotter 2312 is held in the upper portion of the slit 2311c by the biasing force of the elastic body 2314.

The rod cylinder 2315 constitutes a piston and cylinder mechanism which uses the piston rod 2313 (piston portion 2313b) as a piston. The rod cylinder 2315 is integrally formed with the rear end portion of the clamp body 2311, and drives the piston rod 2313 so as to displace in a reciprocating manner in the axial direction of the clamp body 2311. Further, the rod cylinder 2315 receives a fluid pressure from an external fluid pressure mechanism (not illustrated). Then, the piston rod 2313 is driven by the control of the fluid pressure. For example, in the embodiment 1, the rod cylinder 2315 is divided into a first fluid chamber 2315a and a second fluid chamber 2315b through the piston portion 2313b of the piston rod 2313. Then, the piston rod 2313 is pulled toward the rear end portion of the clamp body 2311 by the pressurization of the hydraulic fluid of the first fluid chamber 2315a. Accordingly, the tapered surface 2313a of the piston rod 2313 pressurizes the cotter 2312, so that the cotter 2312 protrudes from the clamp body 2311. Further, the piston rod 2313 is pressed toward the front end portion of the clamp body 2311 by the pressurization of the hydraulic fluid of the second fluid chamber 2315b. Accordingly, the tapered surface 2313a of the piston rod 2313 releases the pressurization toward the cotter 2312, so that the cotter 2312 is accommodated in the clamp body 2311.

The lifting and lowering mechanism 232 is a mechanism which lifts and lowers the clamp mechanism 231, and includes a lifting and lowering cylinder 2321. The lifting and lowering cylinder 2321 constitutes a piston and cylinder mechanism which uses the clamp body 2311 (piston portion 2311d) as a piston. Further, the lifting and lowering cylinder 2321 is directly connected to the rod cylinder 2315 of the clamp mechanism 231. Further, the lifting and lowering cylinder 2321 is fixed to the wing 22a (22b) of the base 2. Accordingly, the clamper 23 is fixed and held by the wing 22a (22b) of the base 2 through the lifting and lowering cylinder 2321. The lifting and lowering cylinder 2321 receives a fluid pressure from an external fluid pressure mechanism (not illustrated). Then, the clamp body 2311 as the piston displaces in a reciprocating manner by the control of the fluid pressure, so that the clamp mechanism 231 is lifted and lowered. For example, in the embodiment 1, the lifting and lowering cylinder 2321 is divided into a first fluid chamber 2321a and a second fluid chamber 2321b through the piston portion 2311d of the clamp body 2311. Then, the clamp body 2311 is pressed toward the front end portion by the pressurization of the hydraulic fluid of the first fluid chamber 2321a, so that the clamp body 2311 is lifted. Further, the clamp body 2311 is pulled toward the rear end portion by the pressurization of the hydraulic fluid of the second fluid chamber 2321b, so that the clamp body 2311 is lowered.

### [Process of clamping heat transfer tube]

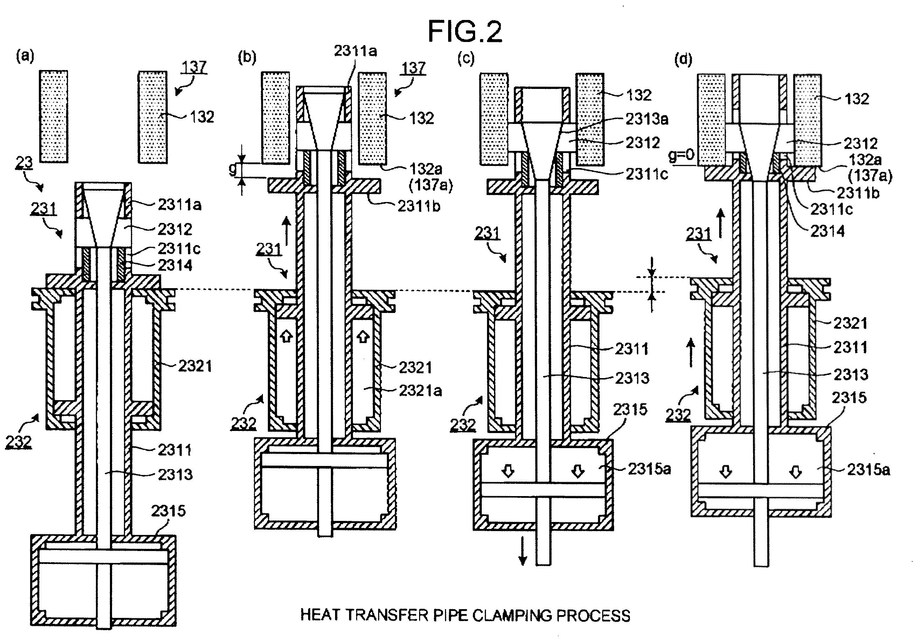

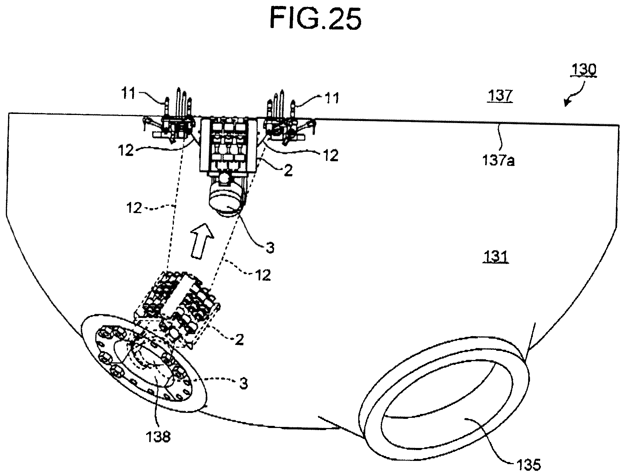

FIG. 25 is a diagram illustrating a process of installing the base 2. FIG. 2 is a diagram illustrating a clamping process of the clamper described in FIG. 1. In these drawings, FIG. 25 illustrates a process (a base installing process) in which the assembled structure of the base 2 and the intermediate link 3 is carried to the water chamber 131 and is installed in the tube plate surface 137a, and FIG. 2 illustrates a state where the clamper 23 of the base 2 clamps and holds the heat transfer tube 132 in the base installing process.

In the process of installing the base 2, a pair of base carrying attachment fixtures 11 is attached to the tube plate surface 137a of the water chamber 131, and the assembled structure of the base 2 and the intermediate link 3 is carried from a manhole 138 into the water chamber 131 (see FIG. 25). Then, the base carrying attachment fixtures 11 hold the assembled structure so as to be hung to the tube plate surface 137a through a wire 12. Subsequently, the base 2 inserts the front end portions of the clampers 23a and 23b (the insertion portion 2311a of the clamp mechanism 231) into the heat transfer tube 132 so as to clamp and hold the heat transfer tube 132.

In the process in which the clamper 23 clamps the heat transfer tube 132, as the initial state, the clamper 23 is first disposed so that the axial direction is aligned to the vertical direction while the front end portion (the insertion portion 2311a of the clamp mechanism 231) faces the heat transfer tube 132 (see FIG. 2(a)). Further, the clamper 23 is fixed to the wing 22a (22b) of the base 2 in the lifting and lowering cylinder 2321 of the lifting and lowering mechanism 232. Further, in a state where the piston rod 2313 is pressed toward the front end portion of the clamp body 2311, the cotter 2312 is accommodated inside the slit 2311c of the clamp body 2311 while decreasing in diameter. Further, in a state where the elastic body 2314 is lengthened, the cotter 2312 is pressed upward toward the front end portion inside the slit 2311c of the clamp body 2311. Further, in a state where the lifting and lowering mechanism 232 lowers the clamp mechanism 231, the insertion portion 2311a is positioned at the side near the heat transfer tube 132.

Next, the lifting and lowering mechanism 232 pressurizes the hydraulic fluid of the first fluid chamber 2321a of the lifting and lowering cylinder 2321 so as to lift the clamp mechanism 231 (see FIG. 2(b)). Accordingly, the insertion portion 2311a of the clamp mechanism 231 is inserted into the heat transfer tube 132. At this time, since the lifting and lowering cylinder 2321 is held at the side of the base body 21 (the wing 22a (22b)) and the base body 21 is held while being hung by the wires 12 of the base carrying attachment fixtures 11 (see FIG. 25), the height position of the lifting and lowering cylinder 2321 is constantly maintained. Further, in this state, the contact portion 2311b of the clamp body 2311 and the opening edge portion 132a of the heat transfer tube 132 (the tube plate surface 137a) normally comes into close contact with each other (a gap g may be generated depending on the conditions).

Next, the clamp mechanism 231 pressurizes the hydraulic fluid of the first fluid chamber 2315a of the rod cylinder 2315 (see FIG. 2(c)). Then, the piston rod 2313 is pulled toward the rear end portion of the clamp body 2311 so as to be lowered, and the tapered surface 2313a presses and opens the cotter 2312 so as to increase the diameter of the cotter 2312. Then, the cotter 2312 protrudes from the slit 2311c of the clamp body 2311, and the head portion of the cotter 2312 is pressed against the inner peripheral surface of the heat transfer tube 132 so as to come into friction-contact therewith. Accordingly, the cotter 2312 clamps and holds the heat transfer tube 132.

Next, in a state where the cotter 2312 comes into friction-contact with the heat transfer tube 132, the clamp mechanism 231 further pressurizes the hydraulic fluid of the first fluid chamber 2315a of the rod cylinder 2315 (see FIG. 2(d)). Then, since the piston rod 2313 is fixed to the heat transfer tube 132 through the cotter 2312, the clamp body 2311 pulls the piston rod 2313 toward the rear end portion, so that the entire clamper 23 is lifted upward. Accordingly, a gap g between the contact portion 2311b of the clamp body 2311 and the opening edge portion 132a of the heat transfer tube 132 is closed so that the contact portion 2311b of the clamp mechanism 231 is pressed against the opening edge portion 132a of the heat transfer tube 132 so as to come into plane-contact therewith. Specifically, the rod cylinder 2315, the clamp body 2311 integrated with the rod cylinder 2315, the lifting and lowering cylinder 2321 engaging with the clamp body 2311, and the base 2 connected to the lifting and lowering cylinder 2321 are all pulled by the fluid pressure of the rod cylinder 2315 so as to be lifted. Further, at this time, the position of the slit 2311c moves toward the front end portion of the clamp body 2311 with respect to the cotter 2312 by the axial displacement of the clamp body 2311. Further, the elastic body 2314 between the clamp body 2311 and the cotter 2312 is deformed in a compressed state.

Then, the plurality of clampers 23 (23a and 23b) which are installed in the base 2 clamp and hold the heat transfer tube 132 as described above, so that the base 2 is fixed to the tube plate surface 137a in a suspended state (see FIG. 25). At this time, since the respective clampers 23 clamp and hold the heat transfer tubes 132 by causing the contact portion 2311b to come into close contact with the opening edge portion 132a of the heat transfer tube 132 (the tube plate surface 137a) (see FIG. 2(d)), the base 2 is properly fixed to the tube plate surface 137a. Accordingly, the in-channel-head operation device 1 is stably installed in the tube plate surface 137a during the operation inside the water chamber.

### [Process of unclamping heat transfer tube]

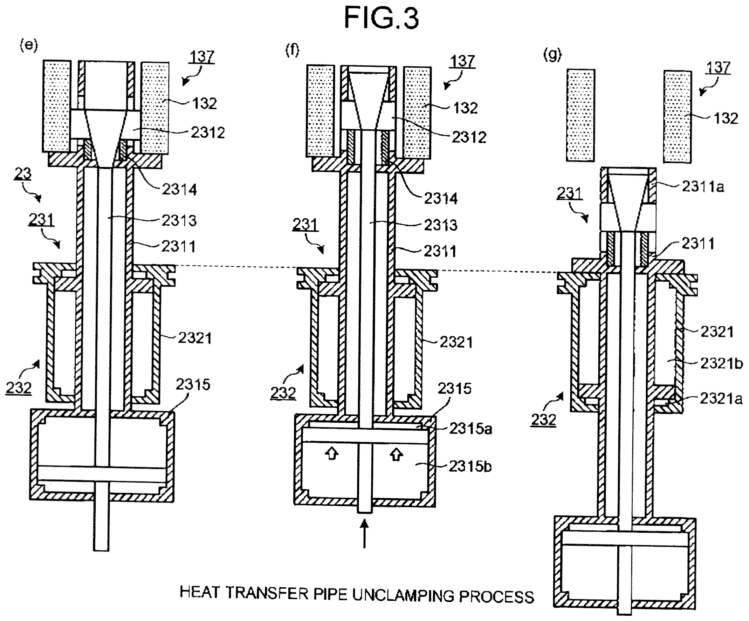

FIG. 3 is a diagram illustrating a process of unclamping the clamper described in FIG. 1. The same drawing illustrates a state where the clampers 23a and 23b unclamp the heat transfer tubes 132 in a process in which the in-channel-head operation device 1 is removed from the water chamber 131 (a removing process).

When the clamper 23 unclamps the heat transfer tube 132, in a state where the clamper 23 clamps and holds the heat transfer tube 132 (see FIG. 3(e)), the clamp mechanism 231 pressurizes the hydraulic fluid of the second fluid chamber 2315b of the rod cylinder 2315 and depressurizes the hydraulic fluid of the first fluid chamber 2315a thereof (see FIG. 3(f)). Then, the piston rod 2313 is pressed toward the front end portion of the clamp body 2311 and the cotter 2312 is accommodated inside the clamp body 2311 while decreasing in diameter. Further, the compression state of the elastic body 2314 is released, so that the elastic body 2314 is restored. Accordingly, the clamp body 2311 may be extracted from the heat transfer tube 132.

Next, the lifting and lowering mechanism 232 pressurizes the hydraulic fluid of the second fluid chamber 2321b of the lifting and lowering cylinder 2321 and depressurizes the hydraulic fluid of the first fluid chamber 2321a so as to lower the clamp mechanism 231 (see FIG. 3(g)). Accordingly, the insertion portion 2311a of the clamp body 2311 is extracted from the heat transfer tube 132, so that the clamping and holding of the heat transfer tube 132 is released.

Then, the plurality of clampers 23 (22a and 23b) installed in the base 2 release the clamping and holding of the heat transfer tube 132, so that the base 2 may be separated from the tube plate surface 137a. Further, since the base 2 is held so as to be hung by the wire 12 of the base carrying attachment fixture 11 in this state, the falling of the base 2 is prevented (see FIG. 25).

Furthermore, in the embodiment 1, in a state where the clamper 23 clamps and holds the heat transfer tube 132, the piston rod 2313 passes through the rod cylinder 2315 and protrudes toward the rear end portion of the rod cylinder 2315 (see FIG. 3(e)). In such a configuration, when the piston rod 2313 does not come off from the cotter 2312 due to the fitting thereto upon unclamping the heat transfer tube 132, the piston rod 2313 may be separated from the cotter 2312 by beating the rear end portion of the piston rod 2313 from the outside. Accordingly, it is possible to perform the unclamping process in an emergency state.

### [Fluid pressure control mechanism of rod cylinder]

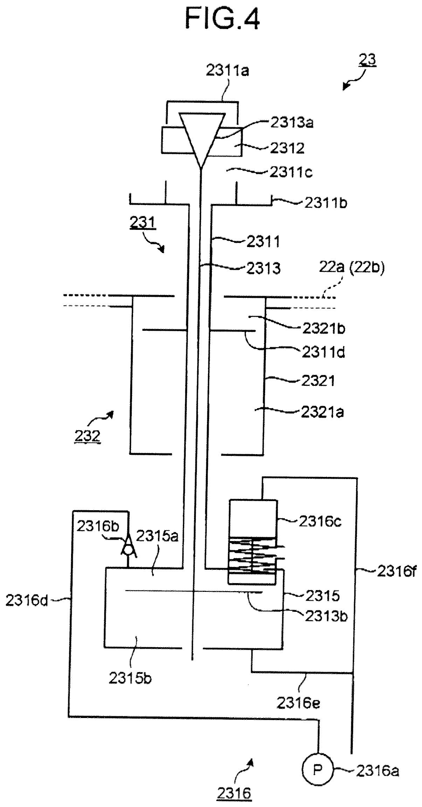

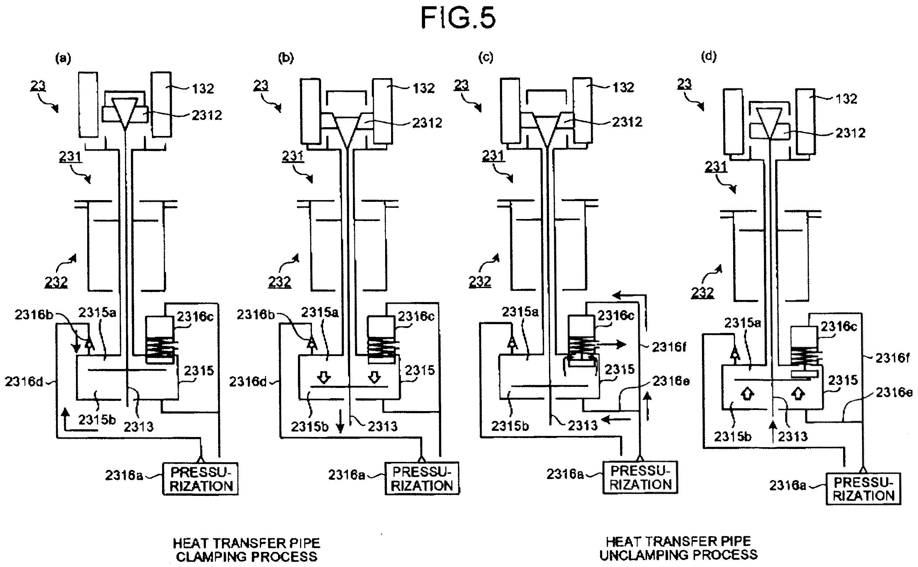

FIG. 4 is a schematic diagram illustrating a specific example of the clamper described in FIG. 1. FIG. 5 is a diagram illustrating an operation of the clamper described in FIG. 4. These drawings illustrate a configuration (FIG. 4) and an effect (FIG. 5) of the fluid pressure control mechanism of the rod cylinder 2315.

As illustrated in FIG. 4, in the clamper 23, the clamp mechanism 231 includes a fluid pressure control mechanism 2316 which controls the fluid pressure of the rod cylinder 2315. The fluid pressure control mechanism 2316 includes a pressurizing pump 2316a, a check valve 2316b, and a release valve 2316c, and these are connected to the rod cylinder 2315 through tubes 2316d to 2316f. The pressurizing pump 2316a is a pump which pressurizes a hydraulic fluid (for example, air) of the rod cylinder 2315. The pressurizing pump 2316a is connected to the first fluid chamber 2315a of the rod cylinder 2315 through the tube 2316d, and is connected to the second fluid chamber 2315b of the rod cylinder 2315 through the tube 2316e. Further, the pressurizing pump 2316a may selectively pressurize the hydraulic fluids of the first fluid chamber 2315a and the second fluid chamber 2315b of the rod cylinder 2315. The check valve 2316b is disposed on the tube 2316d near the first fluid chamber 2315a of the rod cylinder 2315 so as to prevent the reverse flow of the hydraulic fluid from the first fluid chamber 2315a. The release valve 2316c is a valve which releases the hydraulic fluid of the first fluid chamber 2315a of the rod cylinder 2315 to the outside, and is installed in the first fluid chamber 2315a. The release valve 2316c is connected to the pressurizing pump 2316a through the tube 2316f, and is driven by the pressurizing pump 2316a so as to be opened and closed.

In the process of clamping the heat transfer tube 132, the pressurizing pump 2316a pressurizes the hydraulic fluid of the first fluid chamber 2315a of the rod cylinder 2315 (see FIG. 5(a)). At this time, the release valve 2316c is closed. Thus, the fluid pressure of the first fluid chamber 2315a increases, so that the piston rod 2313 is lowered. Accordingly, the cotter 2312 increases in diameter so as to clamp and hold the heat transfer tube 132 (see FIG. 5(b)). At this time, the check valve 2316b prevents the reverse flow of the hydraulic fluid from the first fluid chamber 2315a. Thus, even when the pressurizing pump 2316a is stopped, the fluid pressure of the first fluid chamber 2315a is maintained, so that the state where the heat transfer tube 132 is clamped is appropriately maintained. By the check valve 2316b, it is possible to realize the fail-safe for maintaining the state where the clamper 23 clamps the heat transfer tube 132 when the original pressure of the hydraulic fluid of the clamper is interrupted.

In the process of unclamping the heat transfer tube 132, the pressurizing pump 2316a pressurizes the hydraulic fluid of the second fluid chamber 2315b, and simultaneously depressurizes the hydraulic fluid of the first fluid chamber 2315a by opening the release valve 2316c (see FIG. 5(c)). At the same time, the fluid pressure of the second fluid chamber 2315b increases, so that the piston rod 2313 is lifted. Accordingly, the cotter 2312 decreases in diameter, so that the state where the heat transfer tube 132 is clamped is released (see FIG. 5(d)). In the embodiment 1, air is used as the hydraulic fluid of the rod cylinder 2315. For this reason, the hydraulic fluid of the first fluid chamber 2315a is directly discharged from the release valve 2316c into the water chamber 131.

### [Cotter diameter decreasing structure]

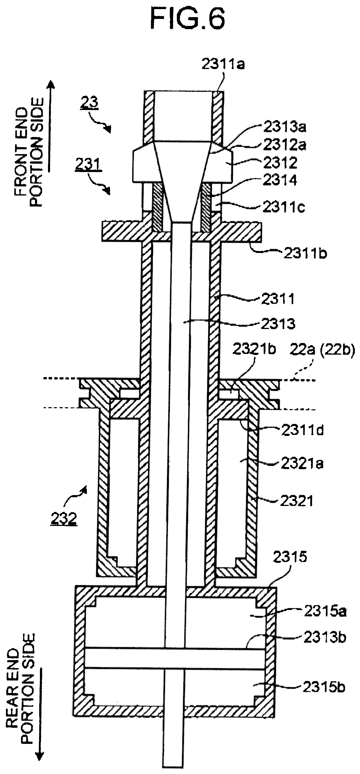

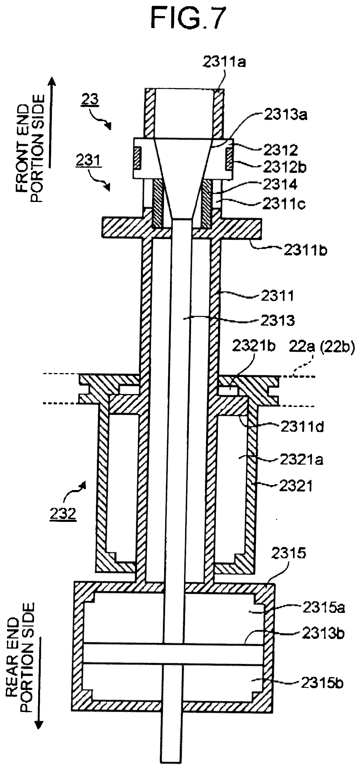

FIGS. 6 and 7 are diagrams illustrating a cotter diameter decreasing structure of the clamper described in FIG. 1. These drawings illustrate a structure which decreases the diameter of the cotter 2312 of the clamp mechanism 231 in the process of unclamping the clamper 23.

In the clamper 23 illustrated in FIG. 6, the cotter 2312 includes a tapered surface 2312a, and the tapered surface 2312a is disposed toward the front end portion of the clamp body 2311 inside the slit 2311c of the clamp body 2311. Further, the elastic body 2314 is biased to the rear end portion of the cotter 2312 while being supported by the clamp body 2311. By the biasing force of the elastic body 2314, the cotter 2312 presses the tapered surface 2312a against the wall surface near the front end portion of the slit 2311c.

In a state where the heat transfer tube 132 is clamped (see FIG. 3(e)), the piston rod 2313 is pulled so as to be lowered, and protrudes from the slit 2311c of the clamp body 2311 while increasing the diameter of the cotter 2312 (see FIG. 6). At this time, the elastic body 2314 is compressed. Next, in the process of unclamping the heat transfer tube 132, when the rod cylinder 2315 is lifted (see FIG. 3(f)), the elastic body 2314 presses the cotter 2312 against the wall surface near the front end portion of the slit 2311c (see FIG. 6). Accordingly, the cotter 2312 decreases in diameter while sliding inside the slit 2311c along the tapered surface 2312a (not illustrated). Accordingly, the cotter 2312 is accommodated inside the clamp body 2311.

In the clamper 23 illustrated in FIG. 7, the cotter 2312 includes an annular elastic member 2312b. The elastic member 2312b is formed by, for example, an annular plate spring and a rubber-like O-ring, and is fitted to the outer peripheral surface of the cotter 2312 (the outside in the radial direction), so that an elastic force is applied to the cotter 2312 inward in the radial direction.

In a state where the heat transfer tube 132 is clamped (see FIG. 3(e)), the piston rod 2313 is pulled so as to be lowered, and protrudes from the slit 2311c of the clamp body 2311 while increasing the diameter of the cotter 2312 (see FIG. 7). At this time, the elastic member 2312b is lengthened by an increase in the diameter of the cotter 2312. Next, in the process of unclamping the heat transfer tube 132, when the rod cylinder 2315 is lifted (see FIG. 3(f)), the elastic member 2312b is shortened and the cotter 2312 decreases in diameter (not illustrated). Accordingly, the cotter 2312 is accommodated inside the clamp body 2311.

### [First modified example of cotter diameter decreasing structure]

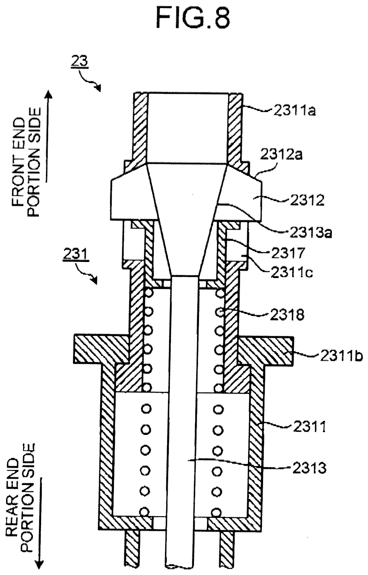

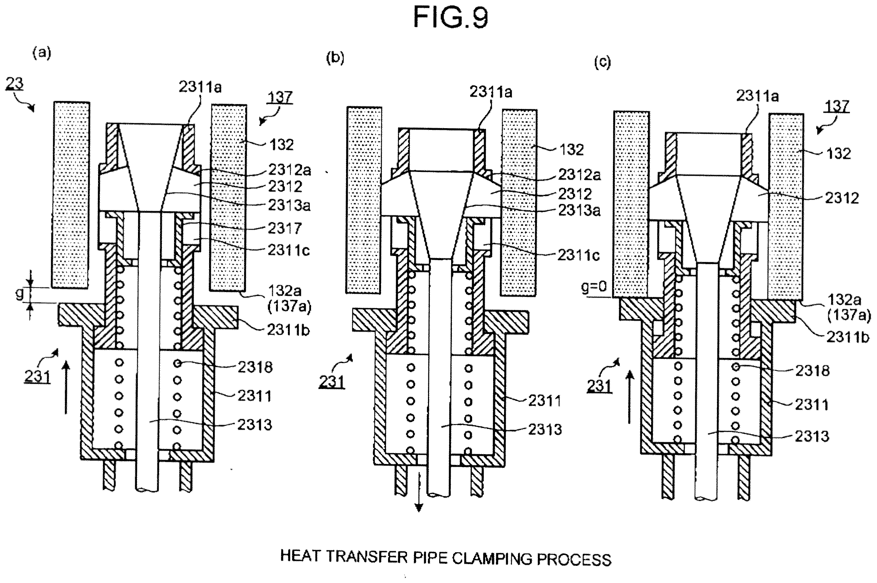

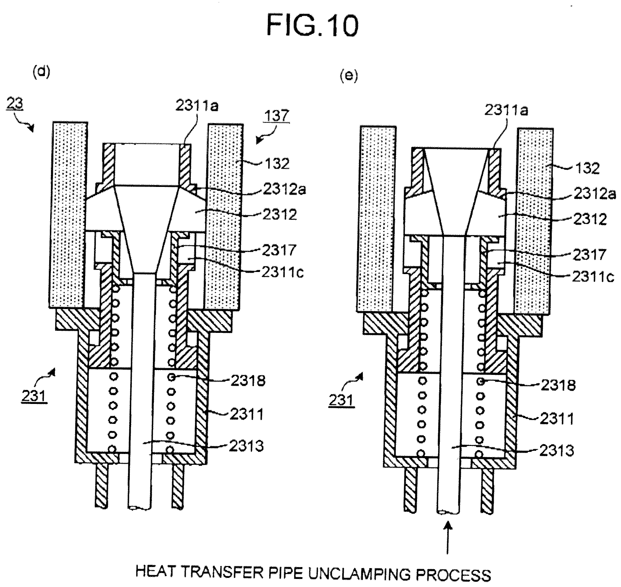

FIGS. 8 to 10 are diagrams illustrating a first modified example of the cotter diameter decreasing structure described in FIG. 6. These drawings respectively indicate a main enlarged view of the cotter diameter decreasing structure (see FIG. 8), an operation diagram in the clamping process (see FIG. 9), and an operation diagram in the unclamping process (see FIG. 10).

The clamper 23 illustrated in FIG. 8 has the following difference compared to the clamper 23 illustrated in FIG. 6. That is, the insertion portion 2311a of the clamp body 2311 is separated from the clamp body 2311. Specifically, the insertion portion 2311a is formed by a tube member having the slit 2311c, and is disposed so as to be movable in a reciprocating manner in the axial direction while being inserted into the front end portion of the clamp body 2311. Further, the cotter 2312 is inserted into the slit 2311c of the insertion portion 2311a, and is disposed inside the slit 2311c so as to be movable in a reciprocating manner in the axial direction and the radial direction of the insertion portion 2311a. Further, the cotter 2312 includes the tapered surface 2312a, and the tapered surface 2312a is disposed so as to face the front end portion of the clamp body 2311. Further, the rear end portion of the cotter 2312 is provided with a support member 2317 which supports the cotter 2312. The support member 2317 is a tube member which has a flange-shaped front end portion, and is disposed so that the front end portion thereof contacts the rear end portion of the cotter 2312. Further, the support member 2317 is inserted into the insertion portion 2311a, and is disposed inside the slit 2311c so as to be movable in a reciprocating manner in the axial direction of the insertion portion 2311a. Further, an elastic body 2318 is disposed so as to be interposed between the rear end portion of the support member 2317 and the clamp body 2311. The elastic body 2318 is formed by, for example, a coil spring or a rubber tube, and is biased to the rear end portion of the support member 2317 while being supported by the clamp body 2311. By the biasing force of the elastic body 2318, the support member 2317 is held while pressing the cotter 2312 against the wall surface near the front end portion of the slit 2311c, and the insertion portion 2311a is held so as to protrude from the front end portion of the clamp body 2311 in the axial direction.

In the clamping process, the lifting and lowering mechanism 232 lifts the clamp mechanism 231, so that the clamp mechanism 231 inserts the insertion portion 2311a into the heat transfer tube 132 (see FIGS. 9(a) and 2(b)). At this time, the contact portion 2311b of the clamp body 2311 and the opening edge portion 132a of the heat transfer tube 132 (the tube plate surface 137a) come into close contact with each other (a gap g may be formed depending on the conditions).

Next, the clamp mechanism 231 pulls the piston rod 2313 toward the rear end portion so as to be lowered (see FIGS. 9(b) and 2(c)). Then, the tapered surface 2313a of the piston rod 2313 presses and opens the cotter 2312, so that the cotter 2312 increases in diameter. Then, the cotter 2312 protrudes from the slit 2311c of the insertion portion 2311a, and the head portion of the cotter 2312 is pressed against the inner peripheral surface of the heat transfer tube 132 so as to come into friction-contact therewith. At this time, the support member 2317 displaces toward the rear end portion of the clamp body 2311 inside the slit 2311c, so that the cotter 2312 may displace while sliding along the tapered surface 2312a.

Next, in a state where the cotter 2312 comes into friction-contact with the heat transfer tube 132, the clamp mechanism 231 further pulls the piston rod 2313 toward the rear end portion (see FIGS. 9(c) and 2(d)). Then, since the piston rod 2313 is fixed to the heat transfer tube 132 through the cotter 2312, the entire clamper 23 is lifted upward. At this time, since the clamp body 2311 and the insertion portion 2311a are separated from each other, the clamp body 2311 displaces in a sliding manner toward the front end portion in the axial direction with respect to the insertion portion 2311a. Accordingly, a gap g between the contact portion 2311b of the clamp body 2311 and the opening edge portion 132a of the heat transfer tube 132 is closed so that the contact portion 2311b is pressed against the opening edge portion 132a of the heat transfer tube 132 so as to come into plane-contact therewith. Further, the elastic body 2318 between the clamp body 2311 and the support member 2317 is deformed in a compressed state by the axial displacement of the clamp body 2311.

In the unclamping process, when the piston rod 2313 is lifted while the heat transfer tube 132 is clamped, the pressing force from the piston rod 2313 to the cotter 2312 is released (see FIGS. 10(d) and 10(e)). Then, since the support member 2317 presses the cotter 2312 against the clamp body 2311 (the wall surface near the front end portion of the slit 2311c) by the biasing force of the elastic body 2318, the cotter 2312 decreases in diameter while sliding inside the slit 2311c along the tapered surface 2312a. Accordingly, the cotter 2312 is accommodated inside the clamp body 2311.

### [Second modified example of cotter diameter decreasing structure]

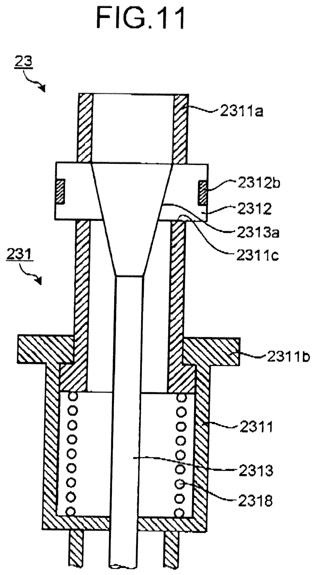

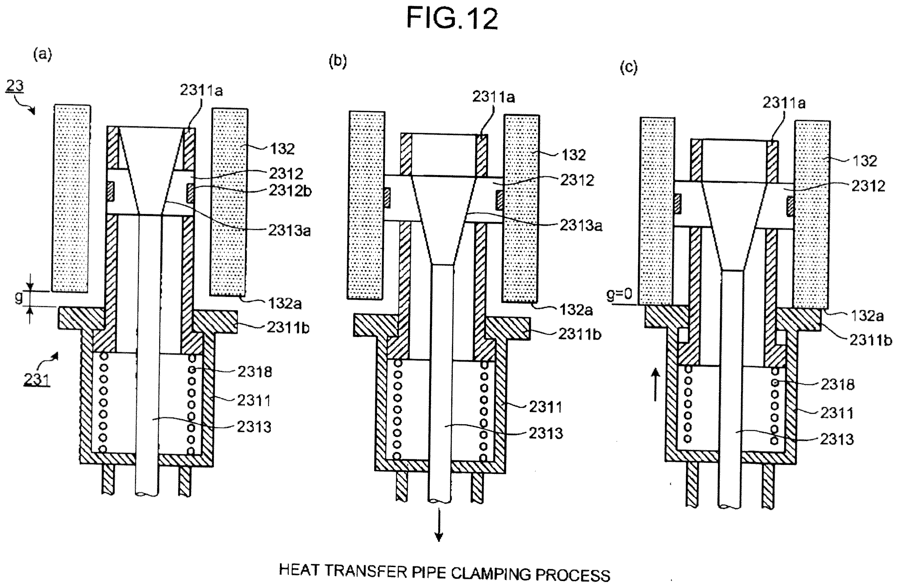

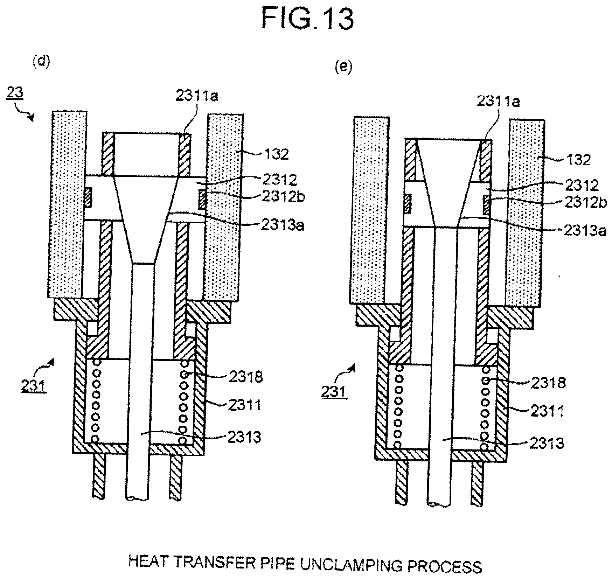

FIGS. 11 to 13 are diagrams illustrating a second modified example of the cotter diameter decreasing structure described in FIG. 7. These drawings respectively indicate a main enlarged diagram of the cotter diameter decreasing structure (FIG. 11), an operation diagram in the clamping process (FIG. 12), and an operation diagram in the unclamping process (FIG. 13).

The clamper 23 illustrated in FIG. 11 has the following difference compared to the clamper 23 illustrated in FIG. 7. That is, the insertion portion 2311a of the clamp body 2311 is separated from the clamp body 2311. Specifically, the insertion portion 2311a is formed by a tube member having the slit 2311c, and is disposed so as to be movable in a reciprocating manner in the axial direction while being inserted into the front end portion of the clamp body 2311. Further, the elastic body 2318 is disposed so as to be interposed between the insertion portion 2311a and the clamp body 2311. Since the elastic body 2318 is biased to the insertion portion 2311a, the insertion portion 2311a is held so as to protrude from the front end portion of the clamp body 2311 in the axial direction. Further, the cotter 2312 is inserted into the slit 2311c of the insertion portion 2311a, and is disposed inside the slit 2311c so as to be movable in a reciprocating manner only in the radial direction of the insertion portion 2311a. Then, the annular elastic member 2312b which decreases the diameter of the cotter 2312 is fitted to the outer peripheral surface of the cotter 2312 (the outside in the radial direction).

In the clamping process, the lifting and lowering mechanism 232 lifts the clamp mechanism 231, so that the clamp mechanism 231 inserts the insertion portion 2311a into the heat transfer tube 132 (see FIGS. 12(a) and 2(b)). At this time, the contact portion 2311b of the clamp body 2311 and the opening edge portion 132a of the heat transfer tube 132 (the tube plate surface 137a) come into close contact with each other (a gap g may be generated depending on the conditions).

Next, the clamp mechanism 231 pulls the piston rod 2313 toward the rear end portion so as to be lowered (see FIGS. 12(b) and 2(c)). Then, the tapered surface 2313a of the piston rod 2313 presses and opens the cotter 2312, so that the cotter 2312 increases in diameter. Then, the cotter 2312 protrudes from the slit 2311c of the insertion portion 2311a, so that the head portion of the cotter 2312 is pressed against the inner peripheral surface of the heat transfer tube 132 so as to come into friction-contact therewith.

Next, in a state where the cotter 2312 comes into friction-contact with the heat transfer tube 132, the clamp mechanism 231 further pulls the piston rod 2313 toward the rear end portion (see FIG. 12(c)). Then, since the piston rod 2313 is fixed to the heat transfer tube 132 through the cotter 2312, the entire clamper 23 is lifted upward. Further, since the clamp body 2311 is separated from the insertion portion 2311a, the clamp body 2311 displaces in a sliding manner with respect to the insertion portion 2311a. Accordingly, a gap g between the contact portion 2311b of the clamp body 2311 and the opening edge portion 132a of the heat transfer tube 132 is closed, so that the contact portion 2311b is pressed against the opening edge portion 132a of the heat transfer tube 132 so as to come into plane-contact therewith. Further, the elastic body 2318 between the clamp body 2311 and the insertion portion 2311a is deformed in a compressed state by the axial displacement of the clamp body 2311.

In the unclamping process, when the piston rod 2313 is lifted while the heat transfer tube 132 is clamped, the pressing force from the piston rod 2313 to the cotter 2312 is released (see FIGS. 13(d) and 13(e)). Then, the elastic member 2312b is shortened so as to decrease the diameter of the cotter 2312 (not illustrated). Accordingly, the cotter 2312 is accommodated inside the clamp body 2311.

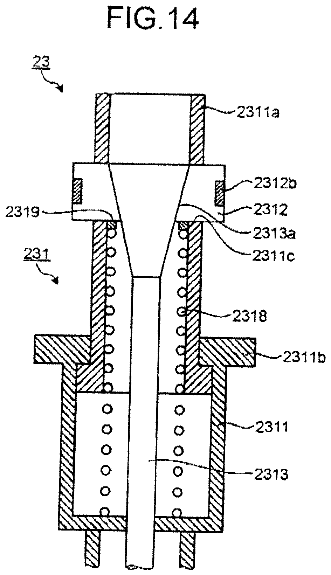

Furthermore, in the second modified example of the cotter diameter decreasing structure, the elastic body 2318 is disposed so as to be interposed between the rear end portion of the insertion portion 2311a and the inner bottom portion of the clamp body 2311 (see FIG. 11). However, the invention is not limited thereto, and the elastic body 2318 may be disposed so as to be interposed between a cotter brace 2319 supporting the rear end portion of the cotter 2312 and the inner bottom portion of the clamp body 2311 (see FIG. 14). In the case of such a configuration, the biasing force of the elastic body 2318 presses the front end portion of the slit 2311c through the cotter brace 2319 and the cotter 2312, and hence the insertion portion 2311a may protrude from the clamp body 2311, whereby the same function may be obtained.

### Second Embodiment

### [Clamper of base]

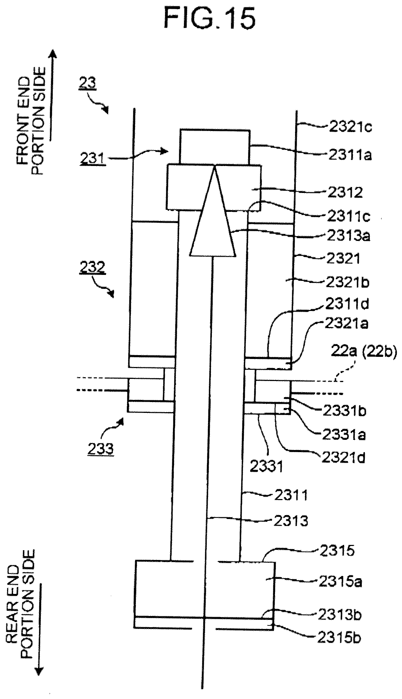

FIG. 15 is an axial cross-sectional view illustrating a clamper according to a second embodiment of the invention.

The clamper 23 of the second embodiment includes the clamp mechanism 231, the lifting and lowering mechanism 232, and an adjusting mechanism 233. Thus, the clamper 23 of the second embodiment is different from the clamper 23 of the first embodiment in that the adjusting mechanism 233 is further provided.

The clamp mechanism 231 is a mechanism which inserts the front end portion into the heat transfer tube 132 so as to clamp the heat transfer tube 132, and includes the clamp body 2311, the piston rod 2313, the cotter 2312, and the rod cylinder 2315.

The clamp body 2311 constitutes the body of the clamp mechanism 231. The axial front end portion of the clamp body 2311 is provided with the insertion portion 2311a which may be inserted into the heat transfer tube 132. For example, in the second embodiment, the clamp body 2311 is formed by an elongated cylindrical member, and one end portion thereof is provided with the insertion portion 2311a. Further, the insertion portion 2311a of the clamp body 2311 is provided with the slits 2311c which are provided as many as the number of the installed cotters 2312. Furthermore, compared to the first embodiment, in the clamper 23 of the second embodiment, the contact portion 2311b (see FIG. 1) of the clamp body 2311 is not provided and a contact portion 2321c is separately installed in the lifting and lowering mechanism 232. This will be described below.

The cotter 2312 is a member that is pressed against the inner peripheral surface of the heat transfer tube 132 so as to come into friction-contact therewith during the clamping process, and is formed of, for example, metal or the like. The cotter 2312 is installed in the clamp body 2311, and is disposed so as to protrude from the insertion portion 2311a of the clamp body 2311 and to be accommodated in the insertion portion 2311a. For example, in the second embodiment, the insertion portion 2311a of the clamp body 2311 is provided with the slit 2311c, and the cotter 2312 is disposed so as to be inserted into the slit 2311c. Further, the cotter 2312 is disposed inside the slit 2311c so as to be movable in a reciprocating manner only in the radial direction of the clamp body 2311. Thus, the cotter 2312 is movable in a reciprocating manner only in the radial direction, and may not displace in the axial direction due to the constraint by the slit 2311c. For this reason, the elastic body 2314 of the clamper 23 of the first embodiment is not provided.

The piston rod 2313 is a rod which drives the cotter 2312, is inserted into the clamp body 2311, and is disposed so as to be movable in a reciprocating manner in the axial direction of the clamp body 2311. The piston rod 2313 includes a tapered front end portion, and is disposed so as to contact the cotter 2312 while the tapered surface 2313a faces the front end portion of the clamp body 2311. Further, when the piston rod 2313 is pressed toward the front end portion of the clamp body 2311, the piston rod 2313 presses the cotter 2312 so that the cotter 2312 protrudes from the clamp body 2311. Thus, the clamper 23 of the second embodiment is different from the clamper 23 of the first embodiment in that the direction of the tapered surface 2313a of the piston rod 2313 is reversed so that the piston rod 2313 for moving the cotter 2312 in a reciprocating manner is operated in a different way. Further, the rear end portion of the piston rod 2313 is provided with the piston portion 2313b.

The rod cylinder 2315 constitutes a piston and cylinder mechanism which uses the piston rod 2313 (the piston portion 2313b) as a piston. The rod cylinder 2315 is integrated with the rear end portion of the clamp body 2311, and drives the piston rod 2313 so that the piston rod 2313 displaces in the axial direction of the clamp body 2311. Further, the rod cylinder 2315 receives a fluid pressure from an external fluid pressure mechanism (not illustrated). Then, by the control of the fluid pressure, the piston rod 2313 is driven. For example, in the clamper 23 of the second embodiment, the rod cylinder 2315 is divided into the first fluid chamber 2315a and the second fluid chamber 2315b through the piston portion 2313b of the piston rod 2313. Then, the piston rod 2313 is pressed toward the front end portion of the clamp body 2311 by the pressurization of the hydraulic fluid of the second fluid chamber 2315b. Accordingly, the tapered surface 2313a of the piston rod 2313 presses the cotter 2312, so that the cotter 2312 protrudes from the clamp body 2311. Further, the piston rod 2313 is pulled toward the rear end portion of the clamp body 2311 by the pressurization of the hydraulic fluid of the first fluid chamber 2315a. Accordingly, the tapered surface 2313a of the piston rod 2313 releases the pressure on the cotter 2312, so that the cotter 2312 is accommodated in the clamp body 2311.

The lifting and lowering mechanism 232 is a mechanism which lifts and lowers the clamp mechanism 231, and includes the lifting and lowering cylinder 2321. The lifting and lowering cylinder 2321 constitutes a piston and cylinder mechanism which uses the clamp body 2311 (the piston portion 2311d) as a piston. Further, the lifting and lowering cylinder 2321 is directly connected to the rod cylinder 2315 of the clamp mechanism 231. The lifting and lowering cylinder 2321 receives a fluid pressure from an external fluid pressure mechanism (not illustrated). Then, the clamp body 2311 as the piston displaces in a reciprocating manner by the control of the fluid pressure, so that the clamp mechanism 231 is lifted. For example, in the second embodiment, the lifting and lowering cylinder 2321 is divided into the first fluid chamber 2321a and the second fluid chamber 2321b through the piston portion 2311d of the clamp body 2311. Then, the clamp body 2311 is pressed toward the front end portion by the pressurization of the hydraulic fluid of the first fluid chamber 2321a, so that the clamp body 2311 is lifted. Further, the clamp body 2311 is pulled toward the rear end portion by the pressurization of the hydraulic fluid of the second fluid chamber 2321b, so that the clamp body 2311 is lowered.

Further, the lifting and lowering cylinder 2321 includes the contact portion 2321c which contacts the tube plate surface 137a of the heat transfer tube 132 while the insertion portion 2311a of the clamp mechanism 231 is inserted into the heat transfer tube 132. For example, in the second embodiment, the contact portion 2321c is formed in a cylindrical shape by extending the front edge portion of the lifting and lowering cylinder 2321 in the axial direction. Then, in a state where the insertion portion 2311a is inserted into the heat transfer tube 132, the contact portion 2321c may cause the cylindrical front edge to contact the opening edge portion 132a of the heat transfer tube 132.

The adjusting mechanism 233 is a mechanism which displaces the lifting and lowering mechanism 232 (the lifting and lowering cylinder 2321) in the axial direction in a reciprocating manner so as to adjust a positional relation (a gap g) between the contact portion 2321c of the lifting and lowering cylinder 2321 and the opening edge portion 132a of the heat transfer tube 132. The adjusting mechanism 233 includes an adjusting cylinder 2331. The adjusting cylinder 2331 constitutes a piston and cylinder mechanism which uses the lifting and lowering cylinder 2321 (the piston portion 2321d) as a piston. Further, the adjusting cylinder 2331 is directly connected to the lifting and lowering cylinder 2321. The adjusting cylinder 2331 receives a fluid pressure from an external fluid pressure mechanism (not illustrated). Then, the lifting and lowering cylinder 2321 as the piston displaces in a reciprocating manner in the axial direction by the control of the fluid pressure. For example, in the second embodiment, the adjusting cylinder 2331 is divided into the first fluid chamber 2331a and the second fluid chamber 2331b through the piston portion 2321d. Then, the lifting and lowering cylinder 2321 is pressed toward the front end portion so as to be advanced (lifted) by the pressurization of the hydraulic fluid of the first fluid chamber 2331a. Further, the lifting and lowering cylinder 2321 is pulled toward the rear end portion so as to be retracted (lowered) by the pressurization of the hydraulic fluid of the second fluid chamber 2331b. By the reciprocating displacement of the lifting and lowering cylinder 2321, a positional relation (a gap g) between the contact portion 2321c of the lifting and lowering cylinder 2321 and the opening edge portion 132a of the heat transfer tube 132 changes.

Further, the adjusting mechanism 233 is fixed to the wing 22a (22b) of the base 2 in the adjusting cylinder 2331. Accordingly, the clamper 23 is held by the wing 22a (22b) of the base 2.

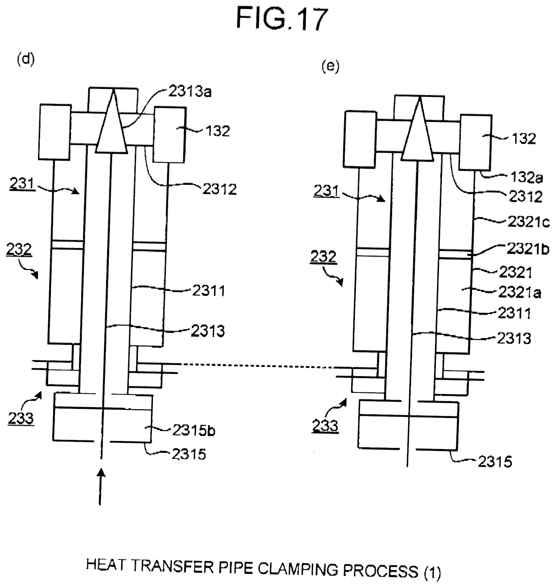

Furthermore, in the second embodiment, the piston rod 2313 includes a front end portion which is formed in a taper shape (a shape in which the insertion direction side with respect to the heat transfer tube 132 is thin), and the front end portion is advanced in the insertion direction of the heat transfer tube 132 so as to press and widen the cotter 2312 (see FIGS. 15 and 17(d)). However, the invention is not limited thereto, and the piston rod 2313 may include a front end portion which is formed in an inverse taper shape (a shape in which the insertion direction side with respect to the heat transfer tube 132 is thick). Then, the front end portion may be retracted with respect to the insertion direction of the heat transfer tube 132 so as to press and widen the cotter 2312 (not illustrated and see FIGS. 11 and 12(b)).

### [Clamping process (1) of heat transfer tube]

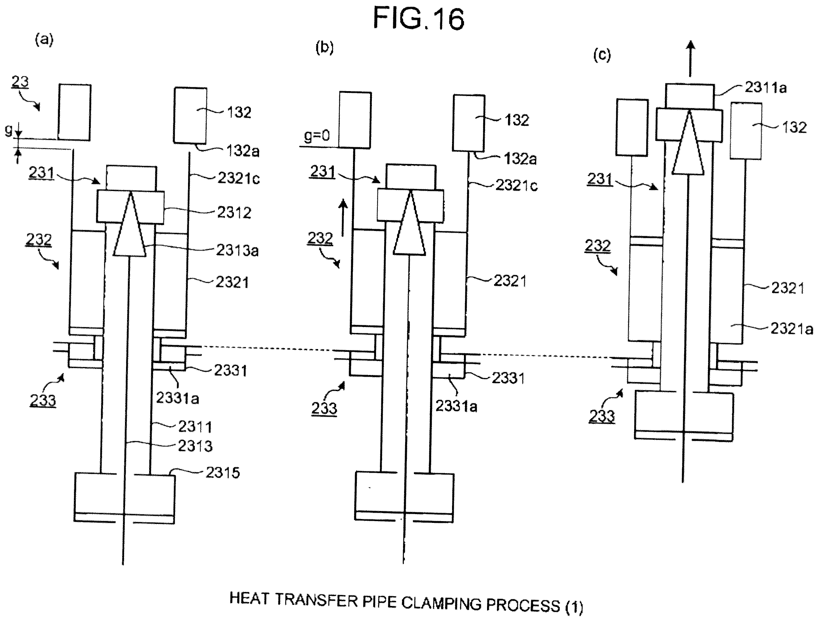

FIGS. 16 and 17 are diagrams illustrating a clamping process (1) of the clamper described in FIG. 15. These drawings indicate a state where the clamper 23 of the base 2 clamps the heat transfer tube 132 in the base installing process.

First, in the initial state, the clamper 23 is disposed so that the axial direction is aligned with the perpendicular direction while the front end portion (the insertion portion 2311a of the clamp mechanism 231) faces the heat transfer tube 132 (see FIG. 16(a)). Further, the clamper 23 is fixed to the wing 22a (22b) of the base 2 in the adjusting cylinder 2331 of the adjusting mechanism 233. Further, in a state where the piston rod 2313 is pulled toward the rear end portion of the clamp body 2311, the cotter 2312 decreases in diameter and is accommodated inside the slit 2311c of the clamp body 2311. Further, in a state where the lifting and lowering mechanism 232 lowers the clamp mechanism 231, the adjusting mechanism 233 retracts the lifting and lowering mechanism 232 downward. Thus, a gap g is opened between the contact portion 2321c of the lifting and lowering cylinder 2321 and the opening edge portion 132a (the tube plate surface 137a) of the heat transfer tube 132.

Next, in the process of clamping the heat transfer tube 132, the adjusting mechanism 233 pressurizes the first fluid chamber 2331a of the adjusting cylinder 2331 so as to advance the lifting and lowering mechanism 232 toward the heat transfer tube 132 (see FIG. 16(b)). Accordingly, the contact portion 2321c of the lifting and lowering cylinder 2321 contacts the opening edge portion 132a (the tube plate surface 137a) of the heat transfer tube 132, so that the gap g is closed. At this time, since the adjusting cylinder 2331 is held by the base body 21 (the wing 22a (22b)) and the base body 21 is held in a suspended state by the wire or the belt 12 of the base carrying attachment fixture 11 (see FIG. 25), the height position of the adjusting cylinder 2331 is constantly maintained.

Next, the lifting and lowering mechanism 232 pressurizes the hydraulic fluid of the first fluid chamber 2321a of the lifting and lowering cylinder 2321 so as to lift the clamp mechanism 231 (see FIG. 16(c)). Accordingly, the insertion portion 2311a of the clamp mechanism 231 is inserted into the heat transfer tube 132.

Next, the clamp mechanism 231 pressurizes the hydraulic fluid of the second fluid chamber 2315b of the rod cylinder 2315 (see FIG. 17(d)). Then, the piston rod 2313 is pressed toward the front end portion of the clamp body 2311 so as to be lifted, so that the tapered surface 2313a presses and opens the cotter 2312 so as to increase the diameter of the cotter 2312. Then, the cotter 2312 protrudes from the clamp body 2311, and comes into friction-contact with the inner peripheral surface of the heat transfer tube 132 in a pressed state. Accordingly, the cotter 2312 clamps the heat transfer tube 132.

Next, in a state where the cotter 2312 comes into friction-contact with the heat transfer tube 132, the lifting and lowering mechanism 232 pressurizes the hydraulic fluid of the second fluid chamber 2321b of the lifting and lowering cylinder 2321 and depressurizes the hydraulic fluid of the first fluid chamber 2321a thereof (see FIG. 17(e)). Then, the pressure relation between the hydraulic fluid of the first fluid chamber 2321a of the lifting and lowering cylinder 2321 and the hydraulic fluid of the second fluid chamber 2321b thereof is reversed. Then, since the piston rod 2313 is fixed to the heat transfer tube 132 through the cotter 2312, the lifting and lowering cylinder 2321 is lifted upward. Accordingly, the contact portion 2321c of the lifting and lowering cylinder 2321 is pressed against the opening edge portion 132a of the heat transfer tube 132 so as to come into close contact therewith.

### [Clamping process (2) of heat transfer tube]

FIGS. 18 and 19 are diagrams illustrating a clamping process (2) of the clamper described in FIG. 15. These drawings indicate a state where the contact portion 2321c of the lifting and lowering cylinder 2321 does not contact the opening edge portion 132a of the heat transfer tube 132 regardless of the operation in which the adjusting mechanism 233 advances the lifting and lowering mechanism 232 toward the heat transfer tube 132 in a step (see FIG. 16(b)) in which the contact portion 2321c of the lifting and lowering cylinder 2321 contacts the opening edge portion 132a of the heat transfer tube 132 (the tube plate surface 137a). Furthermore, in this drawing, the description of the same step as that of the clamping process (1) described in FIGS. 16 and 17 will not be repeated.

First, in the initial state, the clamper 23 is disposed at a predetermined position with respect to the heat transfer tube 132 (see FIG. 18(a)). The initial state is the same as that of FIG. 16(a).

Next, the first fluid chamber 2331a of the adjusting cylinder 2331 is pressurized when clamping the heat transfer tube 132, so that the adjusting mechanism 233 advances the lifting and lowering mechanism 232 toward the heat transfer tube 132 (see FIG. 18(b)). At this time, the contact portion 2321c of the lifting and lowering cylinder 2321 does not contact the opening edge portion 132a of the heat transfer tube 132, and a gap g may remain.

Next, the lifting and lowering mechanism 232 lifts the clamp mechanism 231 (see FIG. 18(c)). This step is the same as the step described in FIG. 16(c).

Next, the piston rod 2313 is lifted so as to press the cotter 2312, and the cotter 2312 increases in diameter so as to clamp the heat transfer tube 132 (see FIG. 19(d)). This step is the same as the step described in FIG. 17(d).

Next, in a state where the cotter 2312 comes into friction-contact with the heat transfer tube 132, the lifting and lowering mechanism 232 pressurizes the hydraulic fluid of the second fluid chamber 2321b of the lifting and lowering cylinder 2321 and depressurizes the hydraulic fluid of the first fluid chamber 2321a (see FIG. 19(e)). Then, the pressure relation between the hydraulic fluid of the first fluid chamber 2321a of the lifting and lowering cylinder 2321 and the hydraulic fluid of the second fluid chamber 2321b thereof is reversed. Then, since the piston rod 2313 is fixed to the heat transfer tube 132 through the cotter 2312, the lifting and lowering cylinder 2321 is lifted upward. Accordingly, the contact portion 2321c of the lifting and lowering cylinder 2321 contacts the opening edge portion 132a of the heat transfer tube 132, so that the gap g is closed. Further, the contact portion 2321c is pressed against the opening edge portion 132a of the heat transfer tube 132 so as to come into close contact therewith.

### [Effect]

As described above, the clamper 23 clamps a subject clamping member (for example, the tube member disposed in the tube plate 137 and herein, the heat transfer tube 132) (see FIGS. 1 to 3 and FIGS. 15 to 17). Further, the clamper 23 includes the clamp mechanism 231 which clamps the subject clamping member and the contact portion 2311 which contacts the subject clamping member at a position different from the clamping position of the clamp mechanism 231 in the clamping state of the clamp mechanism 231.

In such a configuration, in a state where the clamp mechanism 231 clamps the subject clamping member, the contact portion 2311b contacts the subject clamping member at a position (for example, the opening edge portion 132a of the heat transfer tube 132 or the tube plate surface 137a when the subject clamping member is the heat transfer tube 132 disposed in the tube plate 137) different from the clamping position of the clamp mechanism 231 (see FIGS. 2 and 16). Thus, the clamper 23 may clamp the subject clamping member in a close contact state by the multi-point support of the clamp mechanism 231 (the cotter 2312) and the contact portion 2311b. Accordingly, there is an advantage that the subject clamping member may be stably clamped compared to the configuration in which the clamper does not include the contact portion.

Furthermore, in the first and second embodiments, the subject clamping member is the heat transfer tube 132 disposed in the tube plate 137, and the clamper 23 inserts the insertion portion 2311a of the clamp mechanism 231 into the heat transfer tube 132 so as to clamp the heat transfer tube 132 (see FIGS. 2, 15, and 19). However, the subject clamping member as the clamping subject is not limited to the tube member like the heat transfer tube 132. For example, when the subject clamping member includes a subject insertion portion such as a hole, a bore, a concave portion, a slit, and a gap, the clamper 23 may insert the insertion portion 2311 of the clamp mechanism 231 into the subject insertion portion so as to clamp the subject clamping member (not illustrated).

Further, in the first embodiment (the second embodiment), the clamper 23 includes the clamp mechanism 231 and the lifting and lowering mechanism 232 (the adjusting mechanism 233), and when the clamp mechanism 231 and the lifting and lowering mechanism 232 (the adjusting mechanism 233) are operated in the clamping process, the contact portion 2311b (2321c) is lifted so as to contact the opening edge portion 132a of the heat transfer tube 132 (see FIGS. 1 to 3 (FIGS. 15 to 17)). However, the invention is not limited thereto. In a configuration (not illustrated) in which the clamper does not include the lifting and lowering mechanism or the adjusting mechanism, an operator may manually press the contact portion of the clamper against the opening edge portion of the heat transfer tube using a fixture and the clamp mechanism may clamp the heat transfer tube.

Further, the clamper 23 includes the lifting and lowering mechanism 232 which lifts and lowers the clamp mechanism 231 with respect to the subject clamping member. Furthermore, the clamp mechanism 231 includes the contact portion 2311b (see FIG. 1).

In such a configuration, the lifting and lowering mechanism 232 lifts and lowers the clamp mechanism 231, so that the contact portion 2311b of the clamp mechanism 231 is lifted and lowered with respect to the subject clamping member (see FIG. 2). Accordingly, there is an advantage that the contact portion 2311b may approach the subject clamping member regardless of the manual operation of the operator.

Further, in the clamper 23, the clamp mechanism 231 includes the clamp body 2311 which may insert the insertion portion 2311a into the subject clamping member, the cotter 2312 which protrudes from the insertion portion 2311a so as to come into friction-contact with the subject clamping member, the piston rod 2313 which presses the cotter 2312 so that the cotter protrudes from the insertion portion 2311a, and the rod cylinder 2315 which is integrated with the clamp body 2311 and pulls the piston rod 2313 (see FIG. 1).

In such a configuration, when the rod cylinder 2315 drives the piston rod 2313 while the clamp mechanism 231 inserts the insertion portion 2311a into the subject clamping member, the piston rod 2313 presses the cotter 2312 so that the cotter 2312 protrudes from the insertion portion 2311a (see FIG. 2). Then, the cotter 2312 comes into friction-contact with the subject clamping member in a pressed state, so that the subject clamping member is clamped. Accordingly, there is an advantage that the subject clamping member may be stably clamped.

Further, in the above-described configuration, it is desirable that the piston rod 2313 press the cotter 2312 so that the cotter protrudes from the insertion portion 2311a when the rod cylinder 2315 pulls the piston rod 2313 toward the opposite side to the insertion direction of the insertion portion 2311a (see FIG. 2). Accordingly, it is possible to realize a mechanism which pulls the piston rod 2313 toward the opposite side to the insertion direction (toward the rear end portion) so as to operate the cotter 2312.

Further, in the clamper 23, the cotter 2312 is disposed inside the clamp body 2311 so as to be movable in a reciprocating manner (for example, in the insertion direction of the insertion portion 2311a with respect to the insertion portion 2311) (see FIG. 1).

In such a configuration, when the rod cylinder 2315 further pulls the piston rod 2313 while the subject clamping member is clamped (for example, the insertion portion 2311a is inserted into the subject clamping member and the piston rod 2313 is pulled so that the cotter 2312 comes into friction-contact with the subject clamping member), the clamp body 2311 may advance in the insertion direction of the insertion portion 2311a since the rod cylinder 2315 is integrated with the clamp body 2311 and the cotter 2312 is movable in a reciprocating manner inside the clamp body 2311 (see FIGS. 2(c) and 2(d)). Then, when there is a gap g between the contact portion 2311b and the subject clamping member, the gap g may be closed so that the contact portion 2311b comes into close contact with the subject clamping member. Accordingly, there is an advantage that the subject clamping member may be stably clamped.

Further, in the clamper 23, the insertion portion 2311a is separated from the clamp body 2311 and is disposed so as to be slidable with respect to the clamp body 2311 (see FIGS. 8 and 11).

In such a configuration, since the insertion portion 2311a is fitted to the clamp body 2311 in a slidable manner, the clamp body 2311 may be lifted while sliding on the insertion portion 2311a in a state where the insertion portion 2311a is clamped (see FIGS. 9 and 12). Accordingly, since the contact portion 2311b may be pressed against the subject clamping member so as to come into close contact therewith, there is an advantage that the subject clamping member may be stably clamped. Further, in such a configuration, since there is no relative displacement between the insertion portion 2311a (the cotter casing) and the cotter 2312 when the clamp body 2311 is lifted, the cotter 2312 is stably held by the insertion portion 2311a. Accordingly, there is an advantage that the falling or the like of the cotter may be prevented.

Further, the clamper 23 includes the lifting and lowering mechanism 232 which lifts and lowers the clamp mechanism 231 with respect to the subject clamping member and has the contact portion 2321c and the adjusting mechanism 233 which moves the lifting and lowering mechanism 232 in a reciprocating manner with respect to the subject clamping member (for example, in the insertion direction of the insertion portion 2311a) (see FIG. 15).

In such a configuration, the lifting and lowering mechanism 232 is installed so that the contact portion 2321c contacts the subject clamping member while the clamp mechanism 231 clamps the subject clamping member (see FIGS. 17(e) and 19(e)). At this time, the lifting and lowering mechanism 232 lifts and lowers the clamp mechanism 231 with respect to the subject clamping member and the adjusting mechanism 233 reciprocates the lifting and lowering mechanism 232 with respect to the subject clamping member, so that the contact portion 2321c of the lifting and lowering mechanism 232 comes into close contact with the subject clamping member in a pressed state (see FIGS. 16 to 19). Accordingly, there is an advantage that the subject clamping member may be stably clamped compared to the configuration in which the clamper does not include the contact portion.

Further, in the clamper 23, the clamp mechanism 231 includes the clamp body 2311 which has the insertion portion 2311a to be inserted into the subject clamping member, the cotter 2312 which protrudes from the insertion portion 2311a and comes into friction-contact with the subject clamping member, the piston rod 2313 which presses the cotter 2312 so that the cotter 2312 protrudes from the insertion portion 2311a, and the rod cylinder 2315 which is integrated with the clamp body 2311 and drives the piston rod 2313 (see FIG. 15).

In such a configuration, when the rod cylinder 2315 drives the piston rod 2313 while the clamp mechanism 231 inserts the insertion portion 2311a into the subject clamping member, the piston rod 2313 presses the cotter 2312 so that the cotter 2312 protrudes from the insertion portion 2311a. Then, the cotter 2312 comes into friction-contact with the subject clamping member in a pressed state, so that the subject clamping member is clamped. Accordingly, there is an advantage that the subject clamping member may be stably clamped.

For example, when the original pressure of the hydraulic fluid of the clamper 23 is interrupted in the clamping state of the clamper 23 (see FIG. 17(e)), the weight of the base 2 acts on the clamp body 2311 through the adjusting cylinder 2331 and the lifting and lowering cylinder 2321. Then, the weight is applied from the clamp body 2311 (the inner wall surface of the slit 2311c) to the upper surface of the cotter 2312, so that the cotter 2312 is pressed downward in the perpendicular direction. Then, the cotter 2312 is guided in the diameter increasing direction by the tapered surface 2313a of the piston rod 2313, so that the cotter is pressed against the inner wall surface of the subject clamping member (the heat transfer tube 132). Accordingly, even when the original pressure of the hydraulic fluid of the clamper 23 is interrupted, the friction between the cotter 2312 and the subject clamping member is ensured, so that the clamping state of the clamper 23 is maintained. Thus, in the above-described configuration (a configuration in which the piston rod 2313 presses the cotter 2312 so that the cotter 2312 protrudes from the insertion portion 2311a when the rod cylinder 2315 presses the piston rod 2313 in the insertion direction of the insertion portion 2311a and see FIGS. 15 to 17), the configuration is desirable in that the check valve as the safety device is not needed.

Further, in the above-described configuration, it is desirable that the piston rod 2313 press the cotter 2312 so that the cotter 2312 protrudes from the insertion portion 2311a when the rod cylinder 2315 presses the piston rod 2313 in the insertion direction of the insertion portion 2311a. Accordingly, it is possible to realize a mechanism which presses the piston rod 2313 in the insertion direction (toward the front end portion) so as to operate the cotter 2312.

Further, in the clamper 23 with the configuration having the adjusting mechanism 233 (see FIG. 15), a configuration may be also adopted in which the piston rod 2313 presses the cotter 2312 so that the cotter 2312 protrudes from the insertion portion 2311a when the rod cylinder 2315 pulls the piston rod 2313 toward the opposite side to the insertion direction of the insertion portion 2311a (not illustrated and see FIG. 2). Accordingly, it is possible to realize a mechanism which pulls the piston rod 2313 toward the opposite side to the insertion direction (toward the rear end portion) so as to operate the cotter 2312.

Further, in the clamper 23, it is desirable that the rod cylinder 2315 include the check valve 2316b that prevents the reverse flow (specifically, the reverse flow of the hydraulic fluid from the first fluid chamber 2315a) of the hydraulic fluid for driving the piston rod 2313 (the first embodiment is illustrated in FIG. 4 and the second embodiment is not illustrated). In such a configuration, since the piston rod 2313 is maintained in a fixed state when the original pressure of the hydraulic fluid of the clamper 23 is interrupted, the clamping state of the clamper 23 is appropriately maintained.

Further, in the clamper 23, the subject clamping member is a member that is formed by a tube member, and the contact portions 2311b and 2321c contact the member. As the "member that is formed by the tube member", for example, the tube plate 137 of the heat transfer tube 132 opened to the water chamber 131 of the steam generator 130, a nuclear reactor vessel, or a tube base of a steam generator may be supposed.

### Industrial Applicability

As described above, the clamper, the in-channel-head operation device, and the clamping method according to the invention are useful in that the tube member may be stably clamped.

### Reference Signs List

- 1: IN-CHANNEL-HEAD OPERATION DEVICE
- 2: BASE
- 3: INTERMEDIATE LINK
- 4: MANIPULATOR
- 5: TOOL
- 11: BASE CARRYING ATTACHMENT FIXTURE
- 12: WIRE OR BELT
- 21: BASE BODY
- 22a, 22b: WING
- 23, 23a, 23b: CLAMPER
- 130: STEAM GENERATOR
- 131: WATER CHAMBER
- 132: HEAT TRANSFER TUBE (TUBE MEMBER)
- 132a: OPENING EDGE PORTION
- 134: PARTITION PLATE
- 135: INLET TUBE STAND
- 136: OUTLET TUBE STAND
- 137: TUBE PLATE
- 137a: TUBE PLATE SURFACE
- 138: MANHOLE
- 231: CLAMP MECHANISM
- 2311: CLAMP BODY
- 2311a: INSERTION PORTION
- 2311b: CONTACT PORTION
- 2311c: SLIT
- 2311d: PISTON PORTION
- 2312: COTTER
- 2312a: TAPERED SURFACE
- 2312b: ELASTIC MEMBER
- 2313: PISTON ROD
- 2313a: TAPERED SURFACE
- 2313b: PISTON PORTION
- 2314: ELASTIC BODY
- 2315: ROD CYLINDER
- 2315a: FIRST FLUID CHAMBER
- 2315b: SECOND FLUID CHAMBER
- 2316: FLUID PRESSURE CONTROL MECHANISM
- 2316a: PRESSURIZING PUMP
- 2316b: CHECK VALVE
- 2316c: RELEASE VALVE
- 2316d: to 2316f TUBE
- 2317: SUPPORT MEMBER
- 2318: ELASTIC BODY
- 2319: COTTER BRACE
- 232: LIFTING AND LOWERING MECHANISM
- 2321: LIFTING AND LOWERING CYLINDER
- 2321a: FIRST FLUID CHAMBER
- 2321b: SECOND FLUID CHAMBER
- 233: adjusting mechanism
- 2331: adjusting cylinder

## Claims

1. A clamper (23) which clamps a subject clamping member (132), the clamper (23) comprising:
a clamp mechanism (231) which clamps the subject clamping member (132); and
a contact portion (2311b) which, when the clamper (23) is used, contacts the subject clamping member (132) at a position different from a clamping position of the clamp mechanism (231) in the clamping state of the clamp mechanism (231),
wherein the clamp mechanism (231) includes
a clamp body (2311) which has an insertion portion (2311a) to be inserted into the subject clamping member (132) wherein the insertion portion (2311a) is provided with a slit (2311c),
a cotter (2312) which has a first tapered surface (2312a), and is inserted into the slit (2311c), and protrudes from the insertion portion (2311a), and comes into friction-contact with the subject clamping member (132),
a piston rod (2313) which is inserted into the clamp body (2311), and has a front end portion having a second tapered surface (2313a), and is disposed so as to contact the cotter (2312) on an upper portion of the slit (2311c) while the second tapered surface (2313a) faces a rear end portion of the claim body (2311), wherein the second tapered surface (2313a) presses an inner peripheral surface of the cotter (2312) so as to protrude from the insertion portion (2311a) when the piston rod (2313) is pulled toward the rear end portion of the clamp body (2311),
a rod cylinder (2315) which is integrated with the clamp body (2311) and drives the piston rod (2313), and
an elastic body (2314) which is inserted into the clamp body (2311) and is supported by the clamp body (2311) so as to be biased to a rear end portion of the cotter (2312) wherein by the biasing force of the elastic body (2314), the cotter (2312) presses the first tapered surface (2312a) against a wall surface near a front end portion of the slit (2311c).

2. The clamper (23) according to claim 1, further comprising:
a lifting and lowering mechanism (232) which lifts and lowers the clamp mechanism (231) with respect to the subject clamping member (132),
wherein the clamp mechanism (231) includes the contact portion (2311b).

3. The clamper (23) according to claim 1 or 2,
wherein the cotter (2312) is disposed inside the clamp body (2311) so as to be movable in a reciprocating manner.

4. The clamper (23) according to any one of claims 1 to 3,
wherein the insertion portion (2311a) is separated from the clamp body (2311) and is disposed so as to be slidable on the clamp body (2311).

5. The clamper (23) according to claim 1, further comprising:
a lifting and lowering mechanism (232) which lifts and lowers the clamp mechanism (231) with respect to the subject clamping member (132) and has the contact portion (2311b); and
an adjusting mechanism (233) which moves the lifting and lowering mechanism (232) in a reciprocating manner with respect to the subject clamping member (132).

6. The clamper (23) according to any one of claims 1 to 5,
wherein the rod cylinder (2315) includes a check valve (2316b) which prevents a reverse flow of a hydraulic fluid for driving the piston rod (2313).

7. Use of the clamper (23) according to any one of claims 1 to 6, wherein the subject clamping member (132) is a member that is formed by a tube member, and the contact portion (2311b) contacts the member.

8. The use of the clamper (23) according to claim 7,
wherein the member is a tube plate (137).

9. An in-channel-head operation device (1) comprising:
the clamper (23) according to any one of claims 1 to 6.

10. A method of clamping a subject clamping member (132) by a clamper (23) according to any one of claims 1 to 6, the method comprising:
causing the clamper (23) to clamp the subject clamping member (132) and then a part of the other portion of the clamper (23) to contact a position different from the position where the subject clamping member (132) is clamped.

## Patentansprüche

1. Klemme (23), die ein betreffendes Klemmelement (132) klemmt, wobei die Klemme (23) Folgendes umfasst:
einen Klemmmechanismus (231), der das betreffende Klemmelement (132) klemmt; und
einen Kontaktabschnitt (2311b), der, wenn die Klemme (23) verwendet wird, das betreffende Klemmelement (132) in einer Position kontaktiert, die sich von einer Klemmposition des Klemmmechanismus (231) im Klemmzustand des Klemmmechanismus (231) unterscheidet, wobei der Klemmmechanismus (231) Folgendes beinhaltet
einen Klemmkörper (2311), der einen Einsteckabschnitt (2311a) aufweist, der in das betreffende Klemmelement (132) einzustecken ist, wobei der Einsteckabschnitt (2311a) mit einem Schlitz (2311c) versehen ist,
einen Splint (2312), der eine erste konische Fläche (2312a) aufweist und in den Schlitz (2311c) eingesteckt ist, und vom Einsteckabschnitt (2311a) vorsteht, und mit dem betreffenden Klemmelement (132) in Reibkontakt kommt,
eine Kolbenstange (2313), die in den Klemmkörper (2311) eingesteckt ist, und einen vorderen Endabschnitt mit einer zweiten konischen Fläche (2313a) aufweist, und derart angeordnet ist, dass sie den Splint (2312) in einem oberen Abschnitt des Schlitzes (2311c) kontaktiert, während die zweite konische Fläche (2313a) einem hinteren Endabschnitt des Klemmkörpers (2311) zugewandt ist, wobei die zweite konische Fläche (2313a) derart gegen eine innere Umfangsfläche des Splints (2312) drückt, dass er vom Einsteckabschnitt (2311a) vorsteht, wenn die Kolbenstange (2313) zum hinteren Endabschnitt des Klemmkörpers (2311) gezogen wird,
einen Stangenzylinder (2315), der in den Klemmkörper (2311) integriert ist und die Kolbenstange (2313) antreibt, und
einen elastischen Körper (2314), der in den Klemmkörper (2311) eingesteckt ist und vom Klemmkörper (2311) gestützt wird, um zu einem hinteren Endabschnitt des Splints (2312) vorgespannt zu sein, wobei der Splint (2312) durch die Vorspannkraft des elastischen Körpers (2314) die erste konische Fläche (2312a) gegen eine Wandfläche nahe eines vorderen Endabschnitts des Schlitzes (2311c) drückt.

2. Klemme (23) nach Anspruch 1, die ferner Folgendes umfasst:
einen Hebe- und Absenkmechanismus (232), der den Klemmmechanismus (231) mit Bezug auf das betreffende Klemmelement (132) anhebt und absenkt,
wobei der Klemmmechanismus (231) den Kontaktabschnitt (2311b) beinhaltet.

3. Klemme (23) nach Anspruch 1 oder 2,
wobei der Splint (2312) im Klemmkörper (2311) angeordnet ist, um hin und her bewegbar sein zu können.

4. Klemme (23) nach einem der Ansprüche 1 bis 3,
wobei der Einsteckabschnitt (2311a) vom Klemmkörper (2311) getrennt und angeordnet ist, um auf dem Klemmkörper (2311) gleitbar zu sein.

5. Klemme (23) nach Anspruch 1, die ferner Folgendes umfasst:
einen Hebe- und Absenkmechanismus (232), der den Klemmmechanismus (231) mit Bezug auf das betreffende Klemmelement (132) anhebt und absenkt und den Kontaktabschnitt (2311b) aufweist; und
einen Einstellmechanismus (233), der den Hebe- und Absenkmechanismus (232) mit Bezug auf das betreffende Klemmelement (132) in und her bewegt.

6. Klemme (23) nach einem der Ansprüche 1 bis 5,
wobei der Stangenzylinder (2315) ein Sperrventil (2316b) beinhaltet, das einen Rückfluss eines Hydraulikfluids zum Antreiben der Kolbenstange (2313) verhindert.

7. Verwendung der Klemme (23) nach einem der Ansprüche 1 bis 6,
wobei das betreffende Klemmelement (132) ein Element ist, das durch ein Rohrelement gebildet wird, und der Kontaktabschnitt (2311b) das Element kontaktiert.

8. Verwendung der Klemme (23) nach Anspruch 7,
wobei das Element eine Rohrplatte (137) ist.

9. Kanalinterne Kopfbetätigungsvorrichtung (1), die Folgendes umfasst:
die Klemme (23) nach einem der Ansprüche 1 bis 6.

10. Verfahren zum Klemmen eines betreffenden Klemmelements (132) mittels einer Klemme (23) nach einem der Ansprüche 1 bis 6, wobei das Verfahren Folgendes umfasst:
Bewirken, dass die Klemme (23) das betreffende Klemmelement (132) klemmt und dann ein Teil des anderen Abschnitts der Klemme (23) eine Position kontaktiert, die sich von der Position, in der das betreffende Klemmelement (132) geklemmt wird, unterscheidet.

## Revendications

1. Dispositif de serrage (23) qui serre un élément de serrage sujet (132), le dispositif de serrage (23) comprenant :
un mécanisme de serrage (231) qui serre l'élément de serrage sujet (132) ; et
une partie de contact (2311b) qui, lorsque le dispositif de serrage (23) est utilisé, est en contact avec l'élément de serrage sujet (132) dans une position différente d'une position de serrage du mécanisme de serrage (231) à l'état de serrage du mécanisme de serrage (231),
dans lequel le mécanisme de serrage (231), comprend :
un corps de serrage (2311) qui a une partie d'insertion (2311a) à insérer dans l'élément de serrage sujet (132), dans lequel la partie d'insertion (2311a) est prévue avec une fente (2311c),
une clavette (2312) qui a une première surface progressivement rétrécie (2312a) et est insérée dans la fente (2311c), et fait saillie de la partie d'insertion (2311a) et vient en contact par friction avec l'élément de serrage sujet (132),
une tige de piston (2313) qui est insérée dans le corps de serrage (2311) et a une partie d'extrémité avant ayant une seconde surface progressivement rétrécie (2313a) et est disposée afin d'être en contact avec la clavette (2312) sur une partie supérieure de la fente (2311c) alors que la seconde surface progressivement rétrécie (2313a) fait face à une partie d'extrémité arrière du corps de serrage (2311), dans lequel la seconde surface progressivement rétrécie (2313a) comprime une surface périphérique interne de la clavette (2312) afin de faire saillie de la partie d'insertion (2311a) lorsque la tige de piston (2313) est tirée vers la partie d'extrémité arrière du corps de serrage (2311),
un cylindre de tige (2315) qui est intégré avec le corps de serrage (2311) et entraîne la tige de piston (2313), et
un corps élastique (2314) qui est inséré dans le corps de serrage (2311) et est supporté par le corps de serrage (2311) afin d'être sollicité vers une partie d'extrémité arrière de la clavette (2312), dans lequel grâce à la force de sollicitation du corps élastique (2314), la clavette (2312) comprime la première surface progressivement rétrécie (2312a) contre une surface de paroi à proximité d'une partie d'extrémité avant de la fente (2311c).

2. Dispositif de serrage (23) selon la revendication 1, comprenant en outre :
un mécanisme de levage et d'abaissement (232) qui lève et abaisse le mécanisme de serrage (231) par rapport à l'élément de serrage sujet (132),
dans lequel le mécanisme de serrage (231) comprend la partie de contact (2311b).

3. Dispositif de serrage (23) selon la revendication 1 ou 2,
dans lequel la clavette (2312) est disposée à l'intérieur du corps de serrage (2311) afin d'être mobile d'une manière réciproque.

4. Dispositif de serrage (23) selon l'une quelconque des revendications 1 à 3,
dans lequel la partie d'insertion (2311a) est séparée du corps de serrage (2311) et est disposée afin de pouvoir coulisser sur le corps de serrage (2311).

5. Dispositif de serrage (23) selon la revendication 1, comprenant en outre :
un mécanisme de levage et d'abaissement (232) qui lève et abaisse le mécanisme de serrage (231) par rapport à l'élément de serrage sujet (132) et a la partie de contact (2311b) ; et
un mécanisme d'ajustement (233) qui déplace le mécanisme de levage et d'abaissement (232) d'une manière réciproque par rapport à l'élément de serrage sujet (132).

6. Dispositif de serrage (23) selon l'une quelconque des revendications 1 à 5,
dans lequel le cylindre de tige (2315) comprend une valve anti-retour (2316b) qui empêche un écoulement inverse d'un fluide hydraulique pour entraîner la tige de piston (2313).

7. Utilisation du dispositif de serrage (23) selon l'une quelconque des revendications 1 à 6,
dans laquelle l'élément de serrage sujet (132) est un élément qui est formé par un élément de tube, et la partie de contact (2311b) est en contact avec l'élément.

8. Utilisation du dispositif de serrage (23) selon la revendication 7,
dans lequel l'élément est une plaque de tube (137).

9. Appareil de commande de tête par empiétements successives (1) comprenant :
le dispositif de serrage (23) selon l'une quelconque des revendications 1 à 6.

10. Procédé pour serrer un élément de serrage sujet (132) par un dispositif de serrage (23) selon l'une quelconque des revendications 1 à 6, le procédé comprenant :
amener le dispositif de serrage (23) à serrer l'élément de serrage sujet (132) et ensuite une partie de l'autre partie du dispositif de serrage (23) pour venir en contact dans une position différente de la position dans laquelle l'élément de serrage sujet (132) est serré.
